# EUROPÄISCHE PATENTSCHRIFT

(11) **EP 3 667 040 B1**
(45) Veröffentlichungstag und Bekanntmachung des Hinweises auf die Patenterteilung: **13.10.2021**
(21) Anmeldenummer: 19213136.5
(22) Anmeldetag: 03.12.2019
(51) Int. Cl.: F01N 3/20, F01N 13/16, F01N 13/18, B60K 15/03, F02M 25/022, F02M 25/028, C02F 1/50, C02F 103/02

(54) **FAHRZEUGFLÜSSIGKEITSTANK MIT EINER OBERFLÄCHEN-MODIFIZIERENDEN SUBSTANZ**
VEHICLE FLUID TANK COMPRISING A SURFACE MODIFYING SUBSTANCE
RÉSERVOIR DE LIQUIDE DE VÉHICULE DOTÉ D'UNE SUBSTANCE MODIFIANT LA SURFACE

(30) Priorität: 13.12.2018 DE 102018132119
(43) Veröffentlichungstag der Anmeldung: 17.06.2020
(73) Patentinhaber: VERITAS AG, 63571 Gelnhausen (DE)
(72) Erfinder: ROSEMANN, Michael, 63594 Hasselroth (DE); VAN HOOREN, Marc, 63579 Freigericht (DE)
(74) Vertreter: Patentship Patentanwaltsgesellschaft mbH

(56) Entgegenhaltungen:
- EP-A1- 2 711 224
- WO-A1-2018/202825
- DE-A1-102013 013 163
- DE-A1-102016 217 736
- US-A1- 2005 124 724

## Beschreibung

Die vorliegende Erfindung betrifft einen Fahrzeugflüssigkeitstank mit einer Oberflächen-modifizierenden Substanz. Die vorliegende Erfindung betrifft insbesondere einen Fahrzeugflüssigkeitstank zur Aufnahme von Flüssigkeit in einem Fahrzeug mit einer aus Kunststoff geformten Flüssigkeitstankschale mit einer Oberflächen-modifizierenden Substanz.

Herkömmliche Fahrzeuge weisen oftmals Fahrzeugflüssigkeitstanks zur Aufnahme Flüssigkeit, insbesondere von wässriger Flüssigkeit auf. Derartige Fahrzeugflüssigkeitstanks sind insbesondere innerhalb eines Wassereinspritzsystems eines Kraftfahrzeuges angeordnet, welches ausgebildet ist, Wasser, insbesondere destilliertes Wasser, in den Ansaugtrakt eines Verbrennungsmotors einzuspritzen, um eine Leistungssteigerung und/oder eine Abgasreduktion des Verbrennungsmotors zu bewirken.

Derartige Fahrzeugflüssigkeitstanks können insbesondere auch in einem Motorkühlsystem eines Kraftfahrzeugs angeordnet sein, um einen Verbrennungsmotor des Kraftfahrzeugs zu kühlen, oder können auch insbesondere in einem Batterietemperiersystem eines Elektrofahrzeugs angeordnet sein, um eine elektrische Fahrzeugbatterie des Elektrofahrzeugs zu temperieren. Alternativ können derartige Fahrzeugflüssigkeitstanks auch Fahrzeugharnstofftanks zur Aufnahme von wässriger Harnstoff-Lösung umfassen, welche in einem Kraftfahrzeug angeordnet sind, und welche insbesondere in einem Abgasreinigungssystem, insbesondere SCR-Abgasreinigungssystem eines Kraftfahrzeugs, insbesondere Dieselkraftfahrzeugs, angeordnet sind.

In einem herkömmlichen Fahrzeugflüssigkeitstank tritt oftmals das Problem auf, dass sich ein Biofilm auf der mit der Flüssigkeit benetzten Tankinnenoberfläche bilden kann. Ein derartiger Biofilm wird durch Mikroorganismen, wie z.B. Bakterien, Algen, Pilzen oder Protozoen, gebildet, welche die Tankinnenoberfläche besiedeln und die Qualität der in dem Fahrzeugflüssigkeitstank gespeicherten Flüssigkeit beeinträchtigen, wodurch die Funktion von durch die Flüssigkeit versorgten Fahrzeugbauteilen unter Umständen beeinträchtigt werden kann.

Die Druckschrift EP 2 077 976 B1 beschreibt eine bioaktive Ruthenium-haltige Beschichtung.

Die Druckschrift DE 10 2016 217 736 A1 beschreibt eine Wassereinspritzvorrichtung für eine Brennkraftmaschine eines Kraftfahrzeugs.

Die Druckschrift DE 10 2013 013 163 A1 beschreibt ein mehrlagiges Verbundmaterial für einen Kraftstoffbehälter.

Die Druckschrift EP 2 711 224 A1 beschreibt einen Flüssigkeitstank mit einem Verbindungselement.

Es ist die der Erfindung zugrundeliegende Aufgabe, einen Fahrzeugflüssigkeitstank eines Fahrzeugs bereitzustellen, wobei die Bildung von Biofilm in dem Fahrzeugflüssigkeitstank beeinträchtigt ist.

Diese Aufgabe wird durch die Gegenstände mit den Merkmalen nach den unabhängigen Ansprüchen gelöst. Vorteilhafte Ausführungsformen der Erfindung sind Gegenstand der abhängigen Ansprüche.

Gemäß einem ersten Aspekt der Erfindung wird die Aufgabe durch einen Fahrzeugflüssigkeitstank zur Aufnahme von Flüssigkeit in einem Fahrzeug gelöst, mit einer Flüssigkeitstankschale, welche einen Innenraum des Fahrzeugflüssigkeitstanks zur Aufnahme von Flüssigkeit umschließt, wobei die Flüssigkeitstankschale eine dem Innenraum des Fahrzeugflüssigkeitstanks zugewandte Innenoberfläche aufweist, wobei die Flüssigkeitstankschale aus einem Kunststoff geformt ist, wobei innerhalb des Kunststoffs eine Oberflächen-modifizierende Substanz diffusionsstabil eingebettet ist, und wobei die Oberflächen-modifizierende Substanz ausgebildet ist, eine Oberflächeneigenschaft der Innenoberfläche der Flüssigkeitstankschale zu verändern, um eine Besiedelung der Innenoberfläche durch Mikroorganismen zu verhindern, insbesondere signifikant zu reduzieren.

Der Fahrzeugflüssigkeitstank ist insbesondere zur Aufnahme von wässriger Flüssigkeit, insbesondere Wasser, insbesondere von destilliertem Wasser, ausgebildet. Der Fahrzeugflüssigkeitstank ist insbesondere in einem Kraftfahrzeug angeordnet, wobei der Fahrzeugflüssigkeitstank insbesondere in einem Wassereinspritzsystem zum Einspritzen von Wasser in einen Verbrennungsmotor des Kraftfahrzeugs angeordnet ist, oder wobei der Fahrzeugflüssigkeitstank insbesondere in einem Motorkühlsystem des Kraftfahrzeugs angeordnet ist.

Der Fahrzeugflüssigkeitstank kann alternativ auch insbesondere in einem Elektrofahrzeug angeordnet sein, wobei der Fahrzeugflüssigkeitstank insbesondere in einem Batterietemperiersystem zum Temperieren einer elektrischen Fahrzeugbatterie eines Elektrofahrzeugs angeordnet ist.

Alternativ ist der Fahrzeugflüssigkeitstank insbesondere als ein Fahrzeugharnstofftank zur Aufnahme von wässriger Harnstoff-Lösung ausgebildet, welcher in einem Kraftfahrzeug angeordnet ist, und welcher insbesondere in einem Abgasreinigungssystem, insbesondere SCR-Abgasreinigungssystem eines Kraftfahrzeugs, insbesondere Dieselkraftfahrzeugs angeordnet ist.

Die innerhalb des Kunststoffs diffusionsstabil eingebettete Oberflächen-modifizierende Substanz ist ausgebildet, eine Oberflächeneigenschaft der Innenoberfläche der Flüssigkeitstankschale zu verändern, um eine Besiedelung der Innenoberfläche durch Mikroorganismen zu verhindern, insbesondere signifikant zu reduzieren. Dadurch beeinträchtigt die durch die Oberflächen-modifizierende Substanz veränderte Oberflächeneigenschaft der Innenoberfläche an der Innenoberfläche vorhandene Mikroorganismen, wie z.B. Bakterien, Algen, Pilzen oder Protozoen. Durch die veränderte Oberflächeneigenschaft der Innenoberfläche kann die Bindung, insbesondere Adhäsion, der Mikroorganismen an die Innenoberfläche beeinträchtigt werden, und/oder können an der Innenoberfläche befindliche Mikroorganismen beeinträchtigt, insbesondere abgetötet oder inaktiviert, werden.

Dadurch wird der technische Vorteil erreicht, dass die Bildung eines von Mikroorganismen gebildeten Biofilms an der Innenoberfläche verhindert, bzw. die Menge des gebildeten Biofilms signifikant reduziert werden kann, um eine Verunreinigung der in dem Fahrzeugflüssigkeitstank gespeicherten Flüssigkeit zu verhindern.

Die Oberflächen-modifizierende Substanz umfasst erfindungsgemäß eine Oberflächen-polarisierende Substanz, welche ausgebildet ist, eine Polarisation der Innenoberfläche der Flüssigkeitstankschale zu verändern, um eine Besiedelung der Innenoberfläche durch Mikroorganismen zu verhindern, insbesondere signifikant zu reduzieren.

Durch die Veränderung der Polarisation der Innenoberfläche der aus Kunststoff bestehenden Flüssigkeitstankschale ändert sich die Verteilung von Ladungsträgern, insbesondere negativen Ladungsträgern, an der Innenoberfläche, wodurch an der Innenoberfläche befindliche Mikroorganismen polarisiert werden können, insbesondere durch Übertragung von Ladungsträgern von der polarisierten Innenoberfläche auf die Mikroorganismen. Durch die Polarisation kann die Bindung, insbesondere Adhäsion, der Mikroorganismen an die Innenoberfläche beeinträchtigt werden, bzw. können die Mikroorganismen beeinträchtigt, insbesondere abgetötet oder inaktiviert, werden.

Ferner ist die Oberflächen-polarisierende Substanz, diffusionsstabil innerhalb des Kunststoffs eingebettet, so dass eine Diffusion der Substanz aus dem Kunststoff in die Flüssigkeit verhindert, insbesondere signifikant reduziert wird. Somit kann die Oberflächen-modifizierende Substanz während des Betriebs des Fahrzeugflüssigkeitstanks nicht oder nur in äußerst geringem Umfang in die Flüssigkeit abgegeben werden. Dadurch wird der technische Vorteil erreicht, dass eine Anreicherung der Oberflächen-modifizierenden Substanz in der Flüssigkeit vermieden wird. Somit gilt gemäß einer europäischen Richtlinie eine diffusionsstabil innerhalb des Kunststoffs eingebettete Oberflächen-modifizierende Substanz gemäß der vorliegenden Offenbarung nicht als ein Biozid, so dass sich regulatorische Erleichterungen bei der Zulassung eines entsprechenden Fahrzeugflüssigkeitstanks ergeben.

Zudem wird durch die diffusionsstabile Einbettung der Oberflächen-modifizierenden Substanz sichergestellt, dass die Konzentration der Oberflächen-modifizierenden Substanz innerhalb des Kunststoffs während des Betriebs des Fahrzeugflüssigkeitstanks nicht oder nur in äußerst geringem Umfang absinkt, so dass die Oberflächen-modifizierende Eigenschaften der Oberflächen-modifizierenden Substanz für einen langen Zeitraum, insbesondere für mehrere Jahre, aufrechterhalten werden können.

In einer vorteilhaften Ausführungsform umfasst die Oberflächen-modifizierende Substanz eine einzige Oberflächen-modifizierende Substanz oder eine Mehrzahl von Oberflächen-modifizierenden Substanzen.

In einer vorteilhaften Ausführungsform umfasst der Kunststoff der Flüssigkeitstankschale zumindest einen der folgenden Kunststoffe, Polyolefin, insbesondere Polyethylen, hochdichtes Polyethylen (HDPE) oder Polypropylen, und/oder Polyamid. Insbesondere ist die Flüssigkeitstankschale aus einem einzigen Kunststoff oder aus einer Mehrzahl von Kunststoffen geformt.

Erfindungsgemäß umfasst die Oberflächen-modifizierende Substanz eine Oberflächen-polarisierende Substanz, welche ausgebildet ist, eine Polarisation der Innenoberfläche der Flüssigkeitstankschale zu verändern, um eine Besiedelung der Innenoberfläche durch Mikroorganismen zu verhindern, insbesondere signifikant zu reduzieren, wobei die Oberflächen-polarisierende Substanz insbesondere eine Sterion-Substanz umfasst.

Dadurch wird der technische Vorteil erreicht, dass die Oberflächen-polarisierende Substanz, insbesondere Sterion-Substanz, eine für die Mikroorganismen nachteilige veränderte Polarisation der Innenoberfläche für einen langen Betriebszeitraum des Fahrzeugflüssigkeitstanks aufrechterhalten werden kann, ohne dass die Oberflächen-polarisierende Substanz, insbesondere Sterion-Substanz, hierbei an die Flüssigkeit abgegeben wird, bzw. die Abgabe signifikant reduziert wird.

Hierbei ist die Oberflächen-polarisierende Substanz, insbesondere Sterion-Substanz, insbesondere ausgebildet, eine bipolare Oberflächen-Polarisation der Innenoberfläche zu verursachen, um eine Besiedelung der Innenoberfläche durch Mikroorganismen zu verhindern, insbesondere signifikant zu reduzieren.

Eine veränderte Polarisation, insbesondere bipolare Oberflächen-Polarisation, der Innenoberfläche bewirkt eine Veränderung der Verteilung von Ladungsträgern, insbesondere negativen Ladungsträgern, auf der Innenoberfläche, welche auf Mikroorganismen an der Innenoberfläche übertragen werden können und dadurch die zelluläre Oberfläche der Mikroorganismen polarisieren können. Dadurch kann die Bindung der Mikroorganismen an die Innenoberfläche beeinträchtigt werden und/oder können die Mikroorganismen beeinträchtigt, insbesondere abgetötet oder inaktiviert werden, wodurch die Biofilmbildung an der Innenoberfläche beeinträchtigt wird.

In einer vorteilhaften Ausführungsform umfasst eine in dem Kunststoff diffusionsstabil eingebettete Sterion-Substanz gemäß der vorliegenden Offenbarung zumindest eine Metallorganische Substanz, welche insbesondere von der Firma SteriOne GmbH & Co. KG, Berlin, Deutschland, bezogen werden kann. Zum Hintergrund in Bezug auf eine Sterion-Substanz wird auf den Artikel "Hightech-Kunststoffe versus Mikroorganismen" auf Seite 38 ff. der Zeitschrift "Technische Rundschau" in der Ausgabe Nr. 8/2010 verwiesen.

In einer vorteilhaften Ausführungsform umfasst die Oberflächen-polarisierende Substanz, insbesondere Sterion-Substanz, eine Mehrzahl von Partikeln, welche einen Partikel-Durchmesser zwischen 1 nm und 1000 nm aufweisen, insbesondere zwischen 1 nm und 200 nm, insbesondere zwischen 1 nm und 100 nm, insbesondere zwischen 1 nm und 50 nm, insbesondere zwischen 1 nm und 10 nm. Dadurch wird der technische Vorteil erreicht, dass die entsprechenden Partikel-Durchmesser eine homogene Verteilung der Oberflächen-modifizierenden Substanz innerhalb des Kunststoffs ermöglichen.

In einer vorteilhaften Ausführungsform ist die Oberflächen-modifizierende Substanz in die gesamte aus Kunststoff geformte Flüssigkeitstankschale eingebettet, oder ist die Oberflächen-modifizierende Substanz in einem der Innenoberfläche zugewandten Bereich der aus Kunststoff geformten Flüssigkeitstankschale eingebettet, wobei insbesondere der Bereich durch die Innenoberfläche begrenzt ist und sich von der Innenoberfläche aus in die Flüssigkeitstankschale erstreckt.

Dadurch wird der technische Vorteil erreicht, dass ein Einbetten der Oberflächen-modifizierenden Substanz in die gesamte aus Kunststoff geformte Flüssigkeitstankschale eine besonders einfache und kostengünstige Herstellung des Fahrzeugflüssigkeitstanks ermöglicht.

Wenn die Oberflächen-modifizierende Substanz hingegen in dem der Innenoberfläche zugewandten Bereich der Flüssigkeitstankschale eingebettet wird, kann ein gezieltes Einbringen der Oberflächen-modifizierenden Substanz in räumlicher Nähe der Innenoberfläche sichergestellt werden, wodurch eine besonders wirksame Veränderung der Oberflächeneigenschaft der Innenoberfläche sichergestellt werden kann.

Insbesondere weist der durch die Innenoberfläche begrenzte und sich von der Innenoberfläche aus in die Flüssigkeitstankschale erstreckende Bereich eine Dicke zwischen 1 nm und 100 µm, insbesondere zwischen 1 nm und 10 µm, insbesondere zwischen 1 nm und 1 µm, insbesondere zwischen 1 nm und 100 nm auf.

In einer vorteilhaften Ausführungsform weist die aus einem Kunststoff geformte Flüssigkeitstankschale eine Kunststoff-Matrix auf, in welcher die Oberflächen-modifizierende Substanz diffusionsstabil eingebettet ist, wobei die Kunststoff-Matrix ausgebildet ist, ein Abgeben der Oberflächen-modifizierenden Substanz in die in der Flüssigkeitstankschale aufnehmbaren Flüssigkeit zu reduzieren, insbesondere zu verhindern.

Dadurch wird der technische Vorteil erreicht, dass die Kunststoff-Matrix eine besonders vorteilhafte diffusionsstabile Einbettung der Oberflächen-modifizierenden Substanz innerhalb des Kunststoffs ermöglicht, so dass während der Betriebsdauer des Fahrzeugflüssigkeitstanks die Oberflächen-modifizierende Substanz nicht oder nur in äußerst geringem Umfang aus dem Kunststoff entweichen kann.

Insbesondere weist die Kunststoff-Matrix eine Mehrzahl von Matrixaufnahmen auf, welche eine Größe aufweisen, um die Oberflächen-modifizierende Substanz aufzunehmen und diffusionsstabil einzubetten. Insbesondere entspricht die Größe der Matrixaufnahmen einem Partikel-Durchmesser der Oberflächen-modifizierenden Substanz. Insbesondere beträgt die Größe der Matrixaufnahmen zwischen 1 nm und 1000 nm, insbesondere zwischen 1 nm und 200 nm, insbesondere zwischen 1 nm und 100 nm, insbesondere zwischen 1 nm und 50 nm, insbesondere zwischen 1 nm und 10 nm.

In einer vorteilhaften Ausführungsform ist innerhalb des Kunststoffs der Flüssigkeitstankschale ein antimikrobieller Wirkstoff eingebettet, wobei der Kunststoff durch den antimikrobiellen Wirkstoff durchdringbar ist, und wobei der Kunststoff ausgebildet ist, den eingebetteten antimikrobiellen Wirkstoff an die Flüssigkeit in dem Innenraum des Fahrzeugflüssigkeitstanks durch Diffusion abzugeben.

Dadurch wird der technische Vorteil erreicht, dass durch eine Kombination der in dem Kunststoff diffusionsstabil eingebetteten Oberflächen-modifizierenden Substanz und des aus dem Kunststoff an die Flüssigkeit durch Diffusion abgebbaren antimikrobiellen Wirkstoffs eine besonders wirksame Beeinträchtigung von Mikroorganismen direkt an der Innenoberfläche der Flüssigkeitstankschale und auch innerhalb der Flüssigkeit in dem Innenraum erreicht werden kann.

Der an die Flüssigkeit abgegebene antimikrobielle Wirkstoff beeinträchtigt die Vermehrungsfähigkeit von Mikroorganismen, wie z.B. Bakterien, Algen, Pilzen oder Protozoen, bzw. tötet die Mikroorganismen ab oder inaktiviert diese.

Der Kunststoff der Flüssigkeitstankschale weist hierbei insbesondere kleine Poren und/oder molekulare Zwischenräume auf, durch welche der in dem Kunststoff eingebettete antimikrobielle Wirkstoff, im Rahmen eines Diffusionsvorgangs dringen kann, so dass der Kunststoff durch den antimikrobiellen Wirkstoff durchdringbar ist.

Der durchdringbare Kunststoff stellt hierbei sicher, dass der eingebettete antimikrobielle Wirkstoff, insbesondere langsam, aus dem Kunststoff in die Flüssigkeit des Fahrzeugflüssigkeitstanks diffundiert, so dass durch einen andauernden Diffusionsvorgang eine ausreichend wirksame Konzentration des antimikrobiellen Wirkstoffs in der Flüssigkeit aufrechterhalten werden kann, so dass in der Flüssigkeit vorhandene Mikroorganismen wirksam beeinträchtigt werden können.

Der antimikrobielle Wirkstoff kann insbesondere einen einzigen antimikrobiellen Wirkstoff oder eine Mehrzahl von antimikrobiellen Wirkstoffen umfassen.

Insbesondere kann der zumindest eine antimikrobielle Wirkstoff zumindest einen Hilfsstoff umfassen, z.B. um Diffusionseigenschaften des antimikrobiellen Wirkstoffs zu unterstützen und/oder um die Wirksamkeit des antimikrobiellen Wirkstoffs zu verbessern. Der Hilfsstoff kann insbesondere ein Vitamin, wie z.B. Ascorbinsäure, ein Antioxidans, wie z.B. ein Carotinoid, einen Puffer, wie z.B. Tris(hydroxymethyl)-aminomethan, oder eine biologisch aktive Substanz, wie z.B. ein Enzym und/oder ein Coenzym, umfassen.

Der Kunststoff der Flüssigkeitstankschale bettet die Oberflächen-modifizierende Substanz diffusionsstabil ein, so dass die Oberflächen-modifizierende Substanz den Kunststoff nicht durchdringen kann, so dass die Oberflächen-modifizierende Substanz nicht, insbesondere nur in einem äußerst geringen Umfang, an die in der Flüssigkeitstankschale aufgenommene Flüssigkeit abgegeben werden kann, wohingegen der Kunststoff der Flüssigkeitstankschale durch den antimikrobiellen Wirkstoff durchdringbar ist, so dass der antimikrobielle Wirkstoff an die in der Flüssigkeitstankschale aufgenommene Flüssigkeit abgegeben werden kann.

In einer vorteilhaften Ausführungsform ist der antimikrobielle Wirkstoff in die gesamte aus Kunststoff geformte Flüssigkeitstankschale eingebettet, oder ist der antimikrobielle Wirkstoff in einem der Innenoberfläche zugewandten Bereich der aus Kunststoff geformten Flüssigkeitstankschale eingebettet, wobei insbesondere der Bereich durch die Innenoberfläche begrenzt ist und sich von der Innenoberfläche aus in die Flüssigkeitstankschale erstreckt.

Dadurch wird beispielsweise der technische Vorteil erreicht, dass wenn der antimikrobielle Wirkstoff in der gesamten aus Kunststoff geformten Flüssigkeitstankschale eingebettet ist, eine einfache Herstellbarkeit der Flüssigkeitstankschale gewährleistet wird. Der antimikrobielle Wirkstoff kann alternativ auch nur in einem Bereich der aus Kunststoff geformten Flüssigkeitstankschale eingebettet sein, wodurch der antimikrobielle Wirkstoff gezielt in dem Bereich der Flüssigkeitstankschale angeordnet werden kann, in welchem oder in welchen mit einem Auftreten von Biofilm unter Umständen zu rechnen ist, wie z.B. an der mit Flüssigkeit benetzten Innenoberfläche der Flüssigkeitstankschale.

Insbesondere weist der durch die Innenoberfläche begrenzte und sich von der Innenoberfläche aus in die Flüssigkeitstankschale erstreckende Bereich eine Dicke zwischen 1 nm und 100 µm, insbesondere zwischen 1 nm und 10 µm, insbesondere zwischen 1 nm und 1 µm, insbesondere zwischen 1 nm und 100 nm auf.

Insbesondere ist der antimikrobielle Wirkstoff und die Oberflächen-modifizierende Substanz in demselben Bereich der Flüssigkeitstankschale angeordnet oder sind der antimikrobielle Wirkstoff und die Oberflächen-modifizierende Substanz in unterschiedlichen Bereichen der Flüssigkeitstankschale angeordnet.

In einer vorteilhaften Ausführungsform ist der Kunststoff ausgebildet, den eingebetteten antimikrobiellen Wirkstoff über einen Zeitraum kontinuierlich an die Flüssigkeit in dem Innenraum abzugeben.

Dadurch wird beispielsweise der technische Vorteil erreicht, dass durch die kontinuierliche Abgabe sichergestellt werden kann, dass stets eine geringe zum Beeinträchtigen der Mikroorganismen ausreichende Konzentration des antimikrobiellen Wirkstoffs in der Flüssigkeit vorhanden ist. Zudem kann durch die kontinuierliche Abgabe des antimikrobiellen Wirkstoffs eine zu schnelle Abgabe des antimikrobiellen Wirkstoffs an die Flüssigkeit verhindert werden, so dass ein zu schneller Verbrauch des antimikrobiellen Wirkstoffs in dem Kunststoff verhindert werden kann. Die kontinuierliche Abgabe des antimikrobiellen Wirkstoffs durch den Kunststoff wird insbesondere durch eine vorteilhafte Ausbildung von Poren und/oder molekularen Zwischenräumen des Kunststoffs sichergestellt.

Insbesondere weist der Kunststoff hierbei ein Wirkstoffdepot auf, in welchem der eingebettete antimikrobielle Wirkstoff aufgenommen ist. Das Wirkstoffdepot stellt hierbei insbesondere eine langanhaltende kontinuierliche Abgabe des antimikrobiellen Wirkstoffs an die Flüssigkeit sicher, so dass die Bildung eines Biofilms in dem Fahrzeugflüssigkeitstank für einen langen Zeitraum, insbesondere für den Betriebszeitraum des Fahrzeugflüssigkeitstanks, verhindert werden kann.

In einer vorteilhaften Ausführungsform umfasst der antimikrobielle Wirkstoff einen Feststoff, insbesondere einen metallischen Feststoff oder einen Metallatome, Metallmoleküle und/oder Metallionen enthaltenden Feststoff.

Dadurch wird beispielsweise der technische Vorteil erreicht, dass eine Vielzahl von Mikroorganismen, wie z.B. Bakterien, Algen, Pilzen, Protozoen, durch Metallatome, Metallmoleküle und/oder Metallionen negativ beeinträchtigt werden, so dass durch den metallischen Feststoff, bzw. den Metallatome, Metallmoleküle und/oder Metallionen enthaltenden Feststoff, Mikroorganismen wirksam beeinträchtigt werden können.

In einer vorteilhaften Ausführungsform umfasst der antimikrobielle Wirkstoff einen anorganischen Feststoff, wobei der anorganische Feststoff insbesondere ausgebildet ist, einer Temperatur von mehr als 200 °C, insbesondere von mehr als 300 °C, zu widerstehen.

Dadurch wird beispielsweise der technische Vorteil erreicht, dass ein anorganischer Feststoff eine hohe Stabilität aufweist. Insbesondere ist ein anorganischer Feststoff im Sinne der vorliegenden Offenbarung dadurch gekennzeichnet, dass der anorganische Feststoff keinen Kohlenstoff aufweist. Der anorganische Feststoff kann insbesondere einer Temperatur von mehr als 200 °C, insbesondere von mehr als 300 °C, widerstehen, wodurch der antimikrobielle Wirkstoff bei den erhöhten Herstellungstemperaturen während des Verfahrens, insbesondere eines Spritzgussverfahrens, zur Herstellung des Fahrzeugflüssigkeitstanks nicht zersetzt wird, so dass die antimikrobielle Aktivität des antimikrobiellen Wirkstoffs in der Flüssigkeit gewährleistet bleibt.

In einer vorteilhaften Ausführungsform umfasst der antimikrobielle Wirkstoff zumindest eines der folgenden Metalle, Silber, Zink, Osmium, Gold, Ruthenium und Kupfer, und/oder umfasst der antimikrobielle Wirkstoff zumindest eine der folgenden Verbindungen, Silber-Zink-Zeolith, Silber-Phosphat, Kupfer-Verbindung, Zink-Pyrithion, kolloidales Silber, kolloidales Kupfer, kolloidales Zink, Silber-Nanopartikel, Kupfer-Nanopartikel, Zink-Nanopartikel.

Dadurch wird beispielsweise der technische Vorteil erreicht, dass die genannten Metalle, bzw. Metallverbindungen, eine hohe antimikrobielle Wirksamkeit des antimikrobiellen Wirkstoffs sicherstellen. Hierbei weisen Silber-, Kupfer-, und/oder Zink-Nanopartikel insbesondere einen Durchmesser von weniger als 1 µm auf, insbesondere von weniger als 100 nm, insbesondere von weniger als 50 nm, insbesondere von weniger als 20 nm, insbesondere von weniger als 10 nm, insbesondere von weniger als 1 nm auf.

In einer vorteilhaften Ausführungsform ist der antimikrobielle Wirkstoff in einem Trägermaterial eingebettet, wobei das Trägermaterial mit dem antimikrobiellen Wirkstoff innerhalb des Kunststoffs eingebettet ist, wobei das Trägermaterial ausgebildet ist, den in dem Trägermaterial eingebetteten antimikrobiellen Wirkstoff an den Kunststoff abzugeben, wobei der Kunststoff ausgebildet ist, den antimikrobiellen Wirkstoff an die Flüssigkeit in dem Innenraum des Fahrzeugflüssigkeitstanks durch Diffusion abzugeben, und wobei das Trägermaterial insbesondere zumindest eines der folgenden Materialen umfasst, Glas, Molekularsiebe, Zeolithe, und/oder Alumosilicate.

Dadurch wird beispielsweise der technische Vorteil erreicht, dass durch das Trägermaterial, in welchem der antimikrobielle Wirkstoff eingebettet ist, eine wirksame kontrollierte Freisetzung des antimikrobiellen Wirkstoffs sichergestellt werden kann. Durch die kontrollierte Freisetzung kann eine wirksame Depotwirkung durch das Trägermaterial sichergestellt werden, da verhindert wird, dass der antimikrobielle Wirkstoff sofort in großen Mengen freigesetzt wird und somit eine langanhaltende Freisetzung des antimikrobiellen Wirkstoffs sichergestellt wird, wodurch eine wirksame Konzentration des antimikrobiellen Wirkstoffs in der Flüssigkeit während eines längeren Zeitraums sichergestellt wird.

Insbesondere umfasst das Trägermaterial zumindest eine Vielzahl von Poren, in welchen der antimikrobielle Wirkstoff eingebettet ist, so dass durch das Einbetten des antimikrobiellen Wirkstoffs in dem Trägermaterial die Geschwindigkeit der Freisetzung, bzw. Diffusion, des antimikrobiellen Wirkstoff aus dem Trägermaterial wirksam begrenzt werden kann. Derartige poröse Materialien können insbesondere Molekularsiebe, Glas, insbesondere poröses Glas, Zeolithe und/oder Alumosilicate umfassen. Insbesondere kann der antimikrobielle Wirkstoff auch an der Oberfläche des Trägermaterials eingebettet sein, um eine wirksam kontrollierte Freisetzung des antimikrobiellen Wirkstoffs sicherzustellen.

In einer vorteilhaften Ausführungsform ist die Flüssigkeitstankschale als ein Spritzgussbauteil ausgebildet ist.

Dadurch wird beispielsweise der technische Vorteil erreicht, dass ein als Spritzgussbauteil hergestellter Fahrzeugflüssigkeitstank einfach und kostengünstig, insbesondere in der Form flexibel, herstellbar ist.

In einer vorteilhaften Ausführungsform umfasst die Flüssigkeitstankschale eine erste Tankhalbschale und eine zweite Tankhalbschale, welche miteinander stoffschlüssig verbunden, insbesondere verschweißt, sind.

Dadurch wird beispielsweise der technische Vorteil erreicht, dass durch die beiden miteinander stoffschlüssig verbundenen Flüssigkeitstankschalen ein vorteilhaft ausgebildeter Fahrzeugflüssigkeitstank geformt werden kann.

In einer vorteilhaften Ausführungsform weist die erste Tankhalbschale ein erstes Befestigungselement, insbesondere Befestigungsdom, auf, welches sich in den Innenraum des Fahrzeugflüssigkeitstanks erstreckt und weist die zweite Tankhalbschale ein zweites Befestigungselement, insbesondere Befestigungsdom, auf, welches sich in den Innenraum des Fahrzeugflüssigkeitstanks erstreckt, wobei das erste Befestigungselement und das zweite Befestigungselement miteinander verbunden sind.

Dadurch wird beispielsweise der technische Vorteil erreicht, dass durch die beiden miteinander verbundenen Befestigungselemente eine besonders hohe Stabilität des Fahrzeugflüssigkeitstanks sichergestellt werden kann. Hierbei weisen die ersten und/oder zweiten Befestigungselemente insbesondere jeweils eine Kontaktfläche auf, welche miteinander verbunden, insbesondere verschweißt sind. Hierbei kann insbesondere eine Mehrzahl von ersten und/oder zweiten Befestigungselementen in der ersten und/oder zweiten Tankhalbschale angeordnet sein.

In einer vorteilhaften Ausführungsform weist die jeweilige Tankhalbschale jeweils einen Schalenboden auf, von dem sich das jeweilige Befestigungselement in den Innenraum des Fahrzeugflüssigkeitstanks erstreckt, wobei der Fahrzeugflüssigkeitstank zumindest ein Stabilisierungselement, insbesondere Stabilisierungsrippe, aufweist, welches mit dem jeweiligen Schalenboden und dem jeweiligen Befestigungselement verbunden ist, und ausgebildet ist, das Befestigungselement zu stabilisieren.

Dadurch wird beispielsweise der technische Vorteil erreicht, dass durch die Stabilisierungselemente, eine wirksame Stabilisierung der an der ersten und/oder zweiten Tankhalbschale angeordneten ersten und/oder zweiten Befestigungselemente sichergestellt werden kann.

In einer vorteilhaften Ausführungsform weist die Flüssigkeitstankschale eine Zuführöffnung auf, wobei die Zuführöffnung mit einer Zuführleitung zum Zuführen von Flüssigkeit in den Innenraum des Fahrzeugflüssigkeitstanks fluidtechnisch verbindbar ist, und/oder weist die Flüssigkeitstankschale eine Entlüftungsöffnung auf, wobei die Entlüftungsöffnung mit einer Entlüftungsleitung zum Entlüften des Innenraums des Fahrzeugflüssigkeitstanks fluidtechnisch verbindbar ist, und/oder weist die Flüssigkeitstankschale eine Abführöffnung aufweist, wobei die Abführöffnung mit einer Abführleitung zum Abführen von Flüssigkeit aus dem Innenraum des Fahrzeugflüssigkeitstanks fluidtechnisch verbindbar ist.

Dadurch wird beispielsweise der technische Vorteil erreicht, dass durch die Zuführöffnung wirksam Flüssigkeit dem Fahrzeugflüssigkeitstank zugeführt werden kann, dass durch die Abführöffnung wirksam Flüssigkeit aus dem Fahrzeugflüssigkeitstank abgeführt werden kann, und dass durch die Entlüftungsöffnung ein Druckausgleich beim Zuführen oder Abführen von Flüssigkeit sichergestellt werden kann. Insbesondere ist die Zuführöffnung und/oder die Entlüftungsöffnung an der zweiten, insbesondere oberen, Tankhalbschale angeordnet. Insbesondere ist die Abführöffnung an der ersten, insbesondere unteren, Tankhalbschale angeordnet. Insbesondere weist der Fahrzeugflüssigkeitstank einen Abführstutzen mit der Abführöffnung zum Aufstecken der Abführleitung auf. Insbesondere weist der Fahrzeugflüssigkeitstank einen Zuführstutzen mit der Zuführöffnung zum Aufstecken der Zuführleitung auf. Insbesondere weist der Fahrzeugflüssigkeitstank einen Entlüftungsstutzen mit der Entlüftungsöffnung zum Aufstecken der Entlüftungsleitung auf.

In einer vorteilhaften Ausführungsform ist in dem Innenraum des Fahrzeugflüssigkeitstanks ein Heizkörper angeordnet, welcher ausgebildet ist, die Flüssigkeit in dem Fahrzeugflüssigkeitstank zu erwärmen, und/oder ist in dem Innenraum des Fahrzeugflüssigkeitstanks ein Pumpenmodul zum Abpumpen von Flüssigkeit aus dem Fahrzeugflüssigkeitstank angeordnet.

Dadurch wird beispielsweise der technische Vorteil erreicht, dass durch das Pumpenmodul ein wirksames Abpumpen von Flüssigkeit aus dem Fahrzeugflüssigkeitstank sichergestellt werden kann, und dass durch den Heizkörper die Flüssigkeit in dem Fahrzeugflüssigkeitstank auf einer vorteilhaften Temperatur gehalten werden kann, wodurch z.B. ein Einfrieren von Wasser in einem Wassertank bei niedrigen Temperaturen verhindert werden kann. Der Heizkörper umfasst insbesondere ein elektrisches Heizelement zum Erwärmen des Heizkörpers, wobei das elektrische Heizelement insbesondere ein elektrisches Widerstandsheizelement, einen PTC-Körper oder eine PTC-Folie umfasst.

In einer vorteilhaften Ausführungsform weist der Fahrzeugflüssigkeitstank zumindest eine Schwallwand auf, welche mit einem Schalenboden der jeweiligen Tankhalbschale verbunden und ausgebildet ist eine Flüssigkeitsbewegung der Flüssigkeit in dem Innenraum zu hemmen.

Dadurch wird beispielsweise der technische Vorteil erreicht, dass durch starke Beschleunigungs- oder Abbremsbewegungen des Kraftfahrzeugs verursachte Flüssigkeitsbewegungen, welche sich negativ auf die Fahrstabilität auswirken können, durch die Schwallwand gehemmt werden.

Insbesondere weist die Schwallwand ein weiteres Stabilisierungselement auf, welches mit einem jeweiligen Schalenboden der jeweiligen Tankhalbschale und mit der Schwallwand verbunden ist, und ausgebildet ist, die Schwallwand zu stabilisieren.

In einer vorteilhaften Ausführungsform weist der Fahrzeugflüssigkeitstank eine Trennwand auf, welche mit der Flüssigkeitstankschale verbunden ist, und den Innenraum des Fahrzeugflüssigkeitstanks in einen ersten Innenraumbereich und in einen zweiten Innenraumbereich unterteilt.

Dadurch wird beispielsweise der technische Vorteil erreicht, dass durch die Trennwand eine wirksam Separierung des Innenraums des Fahrzeugflüssigkeitstanks in einzelne Segmente ermöglicht wird. Hierbei können die jeweiligen Innenraumbereiche miteinander fluidtechnisch verbunden sein oder voneinander fluidtechnisch getrennt sein.

Gemäß einem zweiten Aspekt der Erfindung wird die Aufgabe durch eine Fahrzeugtankanordnung mit einem Fahrzeugflüssigkeitstank nach dem ersten Aspekt und einer mit dem Fahrzeugflüssigkeitstank fluidtechnisch verbundenen Abführleitung zum Abführen von Flüssigkeit aus dem Innenraum des Fahrzeugflüssigkeitstanks, und einer mit dem Fahrzeugflüssigkeitstank fluidtechnisch verbundenen Zuführleitung zum Zuführen von Flüssigkeit in den Innenraum des Fahrzeugflüssigkeitstanks gelöst.

Dadurch wird beispielsweise der technische Vorteil erreicht, dass durch die Fahrzeugtankanordnung umfassend den Flüssigkeitstank, die Abführleitung und die Zuführleitung, eine wirksame Zuführung von Flüssigkeit in den Fahrzeugflüssigkeitstank, eine wirksame Speicherung der Flüssigkeit in dem Fahrzeugflüssigkeitstank und eine wirksame Abführung von Flüssigkeit aus dem Fahrzeugflüssigkeitstank zu dem entsprechenden Flüssigkeitsverbraucher in dem Fahrzeug sichergestellt werden kann. Insbesondere weist die Fahrzeugtankanordnung ferner eine mit dem Fahrzeugflüssigkeitstank fluidtechnisch verbundene Entlüftungsleitung zum Entlüften des Fahrzeugflüssigkeitstanks auf. Durch die Entlüftungsleitung kann beim Zuführen von Flüssigkeit in den Fahrzeugflüssigkeitstank sichergestellt werden, dass die dadurch aus dem Fahrzeugflüssigkeitstank verdrängte Luft wirksam abgeführt werden kann.

Insbesondere weist die Flüssigkeitstankschale des Fahrzeugflüssigkeitstanks eine Zuführöffnung auf, wobei die Zuführöffnung mit der Zuführleitung zum Zuführen von Flüssigkeit in den Innenraum des Fahrzeugflüssigkeitstanks fluidtechnisch verbunden ist. Insbesondere weist die Flüssigkeitstankschale des Fahrzeugflüssigkeitstanks eine Entlüftungsöffnung auf, wobei die Entlüftungsöffnung mit der Entlüftungsleitung zum Entlüften des Innenraums des Fahrzeugflüssigkeitstanks fluidtechnisch verbunden ist. Insbesondere weist die Flüssigkeitstankschale des Fahrzeugflüssigkeitstanks eine Abführöffnung auf, wobei die Abführöffnung mit der Abführleitung zum Abführen von Flüssigkeit aus dem Innenraum des Fahrzeugflüssigkeitstanks fluidtechnisch verbunden ist.

Insbesondere weist der Fahrzeugflüssigkeitstank einen Abführstutzen auf, welcher die Abführöffnung aufweist und mit der Abführleitung fluidtechnisch verbunden ist. Insbesondere weist der Fahrzeugflüssigkeitstank einen Zuführstutzen auf, welcher die Zuführöffnung aufweist und mit der Zuführleitung fluidtechnisch verbunden ist. Insbesondere weist der Fahrzeugflüssigkeitstank einen Entlüftungsstutzen auf, welcher die Entlüftungsöffnung aufweist und mit der Entlüftungsleitung fluidtechnisch verbunden ist.

In einer vorteilhaften Ausführungsform ist die Fahrzeugtankanordnung in einem Wassereinspritzsystem zum Einspritzen von Wasser in einen Verbrennungsmotor eines Kraftfahrzeugs, in einem Motorkühlsystem zum Kühlen eines Verbrennungsmotors eines Kraftfahrzeuges, in einem Abgasreinigungssystem, insbesondere SCR-Abgasreinigungssystem, eines Kraftfahrzeugs, insbesondere Dieselkraftfahrzeugs, oder in einem Batterietemperiersystem eines Elektrofahrzeugs, um eine elektrische Fahrzeugbatterie des Elektrofahrzeugs zu temperieren, angeordnet.

Gemäß einem dritten Aspekt der Erfindung wird die Aufgabe durch ein Verfahren zum Herstellen eines Fahrzeugflüssigkeitstanks gelöst, wobei das Verfahren die folgenden Verfahrensschritte umfasst, Bereitstellen von einem Kunststoff, Bereitstellen von einer Oberflächen-modifizierenden Substanz, Mischen des Kunststoffs mit der Oberflächen-modifizierenden Substanz, Schmelzen der Mischung umfassend den Kunststoff und die Oberflächen-modifizierende Substanz, um eine Kunststoffschmelze zu erhalten, und Spritzgießen der Kunststoffschmelze, um einen Fahrzeugflüssigkeitstank mit einer Flüssigkeitstankschale aus Kunststoff zu erhalten, wobei innerhalb des Kunststoffs die Oberflächen-modifizierende Substanz diffusionsstabil eingebettet ist.

Dadurch wird beispielsweise der technische Vorteil erreicht, dass in der Kunststoffschmelze eine besonders wirksame Verteilung der Oberflächen-modifizierenden Substanz innerhalb des Kunststoffs sichergestellt werden kann, und dass durch das sich anschließende Abkühlen der Kunststoffschmelze während des Spritzgussvorgangs sichergestellt wird, dass die Oberflächen-modifizierende Substanz vorteilhaft in dem Kunststoff der geformten Flüssigkeitstankschale eingebettet ist. Durch den Spritzgussvorgang können Fahrzeugflüssigkeitstanks in einer großen Anzahl und mit einem geringen Kostenaufwand hergestellt werden, und zudem kann die Form des Fahrzeugflüssigkeitstanks flexibel gewählt werden.

In einer vorteilhaften Ausführungsform umfasst das Verfahren die folgenden Verfahrensschritte, Bereitstellen von einem Kunststoff, Bereitstellen von einer Oberflächen-modifizierenden Substanz und eines antimikrobiellen Wirkstoffs, Mischen des Kunststoffs mit der Oberflächen-modifizierenden Substanz und dem antimikrobiellen Wirkstoff, Schmelzen der Mischung umfassend den Kunststoff, die Oberflächen-modifizierende Substanz und den antimikrobiellen Wirkstoff, um eine Kunststoffschmelze zu erhalten, und Spritzgießen der Kunststoffschmelze, um einen Fahrzeugflüssigkeitstank mit einer Flüssigkeitstankschale aus Kunststoff zu erhalten, wobei innerhalb des Kunststoffs die Oberflächen-modifizierende Substanz diffusionsstabil eingebettet ist, und wobei innerhalb des Kunststoffs der antimikrobiellen Wirkstoff eingebettet ist, wobei der Kunststoff ausgebildet ist, den antimikrobiellen Wirkstoff durch Diffusion an eine Flüssigkeit in dem Innenraum des Fahrzeugflüssigkeitstanks abzugeben.

Dadurch wird beispielsweise der technische Vorteil erreicht, dass die Oberflächen-modifizierende Substanz und der antimikrobielle Wirkstoff in einem gemeinsamen Verfahrensschritt in den Kunststoff des Fahrzeugflüssigkeitstanks aufgenommen werden können.

Für Details hinsichtlich des Fahrzeugflüssigkeitstanks wird auf die Ausführungen in Bezug auf den ersten Aspekt verwiesen.

In einer vorteilhaften Ausführungsform umfasst das Bereitstellen des antimikrobiellen Wirkstoffs und/oder der Oberflächen-modifizierenden Substanz, in einem ersten Schritt das Einbringen des antimikrobiellen Wirkstoffs und/oder der Oberflächen-modifizierenden Substanz in ein Trägermaterial und/oder in eine Kunststoff-Matrix und in einem sich anschließenden zweiten Schritt das Bereitstellen des Trägermaterials und/oder Kunststoff-Matrix mit dem antimikrobiellen Wirkstoffs und/oder der Oberflächen-modifizierenden Substanz, und umfasst das Mischen des Kunststoffs mit dem antimikrobiellen Wirkstoff und/oder der Oberflächen-modifizierenden Substanz, das Mischen des Kunststoffs mit dem Trägermaterial und/oder der Kunststoff-Matrix, welches den antimikrobiellen Wirkstoff und/oder die Oberflächen-modifizierende Substanz umfasst.

In einer vorteilhaften Ausführungsform umfasst das Bereitstellen des antimikrobiellen Wirkstoffs und/oder der Oberflächen-modifizierenden Substanz, das Bereitstellen einer weiteren Mischung umfassend den antimikrobiellen Wirkstoff und/oder der Oberflächen-modifizierenden Substanz, sowie einem weiteren Kunststoff, und umfasst das Mischen des Kunststoffs mit dem antimikrobiellen Wirkstoff und/oder der Oberflächen-modifizierenden Substanz, das Mischen des Kunststoffs mit der weiteren Mischung.

Dadurch wird beispielsweise der technische Vorteil erreicht, dass durch das Bereitstellen einer weiteren Mischung umfassend den antimikrobiellen Wirkstoff und/oder die Oberflächen-modifizierende Substanz und einem weiteren Kunststoff, ein Vorrat, insbesondere Masterbatch, bereitgestellt werden kann, welcher je nach benötigter Endkonzentration des antimikrobiellen Wirkstoffs und/oder der Oberflächen-modifizierenden Substanz in der Flüssigkeitstankschale durch Mischen mit dem Kunststoff verdünnt werden kann. Der Kunststoff und der weitere Kunststoff können hierbei insbesondere denselben Kunststoff oder unterschiedliche Kunststoffe umfassen. Hierbei kann der antimikrobielle Wirkstoff und/oder die Oberflächen-modifizierende Substanz insbesondere das Trägermaterial und/oder Kunststoff-Matrix mit dem antimikrobiellen Wirkstoff und/oder der Oberflächen-modifizierenden Substanz umfassen.

Ausführungsbeispiele der Erfindung sind in den Zeichnungen dargestellt und werden im Folgenden näher beschrieben.

Es zeigen:
- Fig. 1: eine schematische Ansicht eines Fahrzeugflüssigkeitstanks mit einer aus Kunststoff geformten Flüssigkeitstankschale gemäß einer ersten Ausführungsform;
- Fig. 2: eine perspektivische Ansicht eines Fahrzeugflüssigkeitstanks mit einer aus Kunststoff geformten Flüssigkeitstankschale gemäß einer zweiten Ausführungsform;
- Fig. 3: eine perspektivische Ansicht eines Fahrzeugflüssigkeitstanks mit einer aus Kunststoff geformten Flüssigkeitstankschale gemäß einer dritten Ausführungsform;
- Fig. 4: eine perspektivische Ansicht einer aus Kunststoff geformten Tankhalbschale eines Fahrzeugflüssigkeitstanks gemäß der dritten Ausführungsform;
- Fig. 5: eine schematische Darstellung einer Fahrzeugtankanordnung mit einer Zuführleitung und einer Abführleitung; und
- Fig. 6: eine schematische Darstellung eines Verfahrens zum Herstellen eines Fahrzeugflüssigkeitstanks.

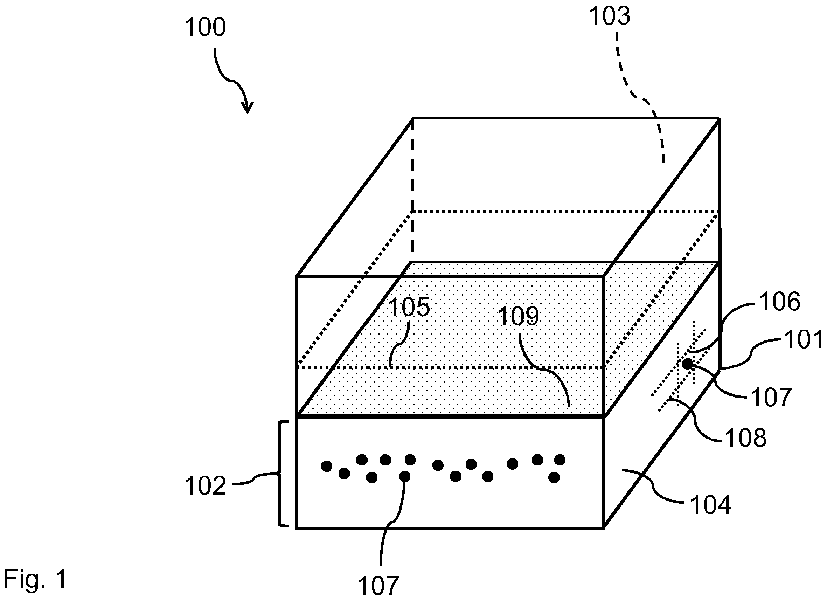

Fig. 1 zeigt eine schematische Ansicht eines Fahrzeugflüssigkeitstanks mit einer aus Kunststoff geformten Flüssigkeitstankschale gemäß einer ersten Ausführungsform. Der Fahrzeugflüssigkeitstank 100 ist insbesondere als ein Wassertank zur Aufnahme einer wässrigen Flüssigkeit, insbesondere von destilliertem Wasser, ausgebildet.

Der Fahrzeugflüssigkeitstank 100 ist insbesondere in einem Wassereinspritzsystem eines Kraftfahrzeugs angeordnet. In herkömmlichen Kraftfahrzeugen werden Wassereinspritzsysteme verwendet, um eine Leistungssteigerung und/oder Abgasreduktion von Verbrennungsmotoren zu bewirken, wobei Wasser, insbesondere destilliertes Wasser, in den Ansaugtrakt eines Verbrennungsmotors eingespritzt wird.

Der Fahrzeugflüssigkeitstank 100 ist insbesondere in einem Motorkühlsystem eines Kraftfahrzeugs angeordnet, um einen Verbrennungsmotor des Kraftfahrzeugs zu kühlen, oder ist insbesondere in einem Batterietemperiersystem eines Elektrofahrzeugs angeordnet, um eine elektrische Fahrzeugbatterie des Elektrofahrzeugs zu temperieren.

Der Fahrzeugflüssigkeitstank 100 ist insbesondere als ein Fahrzeugharnstofftank 100 ausgebildet, welcher in einem Kraftfahrzeug angeordnet ist, und welcher insbesondere in einem Abgasreinigungssystem, insbesondere SCR-Abgasreinigungssystem eines Kraftfahrzeugs, insbesondere Dieselkraftfahrzeugs, angeordnet ist. In herkömmlichen Kraftfahrzeugen, insbesondere Dieselkraftfahrzeugen, werden Abgasreinigungssysteme, insbesondere SCR-Abgasreinigungssysteme verwendet, um eine Harnstoff-Lösung dem Abgasstrang des Kraftfahrzeuges zuzuführen, wobei der Anteil von Stickoxiden in dem Abgas reduziert werden kann.

In herkömmlichen Fahrzeugflüssigkeitstanks 100, z.B. Wassertanks von Wassereinspritzsystemen, Motorkühlsystemen, Batterietemperiersystemen, bzw. Harnstoff-Tanks von Abgasreinigungssystemen, tritt oftmals das Problem auf, dass sich ein Biofilm in dem in den Wassertanks aufgenommenem Wasser bilden kann. Ein derartiger Biofilm wird durch Mikroorganismen, wie z.B. Bakterien, Algen, Pilzen oder Protozoen, gebildet, welche eine Innenoberfläche des Fahrzeugflüssigkeitstanks 100 besiedeln und dadurch die in dem Fahrzeugflüssigkeitstank 100 aufgenommene wässrige Flüssigkeit verunreinigen.

Um das Auftreten eines Biofilms zu verhindern, bzw. die Menge des gebildeten Biofilms zu reduzieren, weist der Fahrzeugflüssigkeitstank 100 gemäß der vorliegenden Offenbarung eine Oberflächen-modifizierende Substanz 107 auf, welche eine Oberflächeneigenschaft der Innenoberfläche des Fahrzeugflüssigkeitstanks 100 derart verändert, um eine Besiedelung der Innenoberfläche durch Mikroorganismen zu verhindern, insbesondere signifikant zu reduzieren.

Hierzu weist der Fahrzeugflüssigkeitstank 100 eine aus einem Kunststoff geformte Flüssigkeitstankschale 101 auf, welche einen Innenraum 103 des Fahrzeugflüssigkeitstanks 100 zur Aufnahme von Flüssigkeit 105 umschließt. Die Flüssigkeitstankschale 101 weist eine dem Innenraum 103 des Fahrzeugflüssigkeitstanks 100 zugewandte Innenoberfläche 109 auf.

Innerhalb des Kunststoffs der Flüssigkeitstankschale 101 ist eine Oberflächen-modifizierende Substanz 107 diffusionsstabil eingebettet, wobei die eingebettete Oberflächen-modifizierende Substanz 107 in der Fig. 1 nur schematisch dargestellt ist. Der Kunststoff der Flüssigkeitstankschale 101 ist durch die Oberflächen-modifizierende Substanz 107 nicht durchdringbar, so dass die Oberflächen-modifizierende Substanz 107 nicht an die in dem Fahrzeugflüssigkeitstank 100 aufgenommene Flüssigkeit 105 abgegeben wird und somit in dem Kunststoff der Flüssigkeitstankschale 101 verbleibt.

Insbesondere weist die aus einem Kunststoff geformte Flüssigkeitstankschale 101 eine Kunststoff-Matrix 108 auf, in welcher die Oberflächen-modifizierende Substanz 107 diffusionsstabil eingebettet ist, wobei die Kunststoff-Matrix 108 ausgebildet ist, ein Abgeben der Oberflächen-modifizierenden Substanz 107 in die in der Flüssigkeitstankschale 101 aufnehmbare Flüssigkeit 105 zu verhindern.

Somit wirkt die Oberflächen-modifizierende Substanz 107 nicht direkt toxisch auf Mikroorganismen in dem Fahrzeugflüssigkeitstank 100, sondern modifiziert vielmehr die Oberflächeneigenschaften der Innenoberfläche 109 der Flüssigkeitstankschale 101 derart, dass eine Besiedelung der Innenoberfläche 109 durch Mikroorganismen verhindert, bzw. stark reduziert wird.

Hierbei weist die Kunststoff-Matrix 108 insbesondere eine Mehrzahl von in der Fig. 1 nur schematisch dargestellte Matrixaufnahmen 106 auf, welche eine Größe aufweisen, um die Oberflächen-modifizierende Substanz 107 aufzunehmen und diffusionsstabil einzubetten. Insbesondere entspricht die Größe der Matrixaufnahmen 106 einem Partikel-Durchmesser der Oberflächen-modifizierenden Substanz 107. Insbesondere beträgt die Größe der Matrixaufnahmen 106 zwischen 1 nm und 1000 nm, insbesondere zwischen 1 nm und 200 nm, insbesondere zwischen 1 nm und 100 nm, insbesondere zwischen 1 nm und 50 nm, insbesondere zwischen 1 nm und 10 nm.

Insbesondere ist die Oberflächen-modifizierende Substanz 107 in die gesamte aus Kunststoff geformte Flüssigkeitstankschale 101 eingebettet.

Alternativ ist die Oberflächen-modifizierende Substanz 107 insbesondere in einem der Innenoberfläche 109 zugewandten Bereich 104 der aus Kunststoff geformten Flüssigkeitstankschale 101 eingebettet, wobei insbesondere der Bereich 104 durch die Innenoberfläche 109 begrenzt ist und sich von der Innenoberfläche 109 aus in die Flüssigkeitstankschale 101 erstreckt.

Insbesondere weist der durch die Innenoberfläche 109 begrenzte und sich von der Innenoberfläche 109 aus in die Flüssigkeitstankschale 101 erstreckende Bereich 104 eine Dicke 102 zwischen 1 nm und 100 µm, insbesondere zwischen 1 nm und 10 µm, insbesondere zwischen 1 nm und 1 µm, insbesondere zwischen 1 nm und 100 nm auf.

Erfindungsgemäß umfasst die Oberflächen-modifizierende Substanz 107 eine Oberflächen-polarisierende Substanz 107, welche ausgebildet ist, eine Polarisation der Innenoberfläche 109 der Flüssigkeitstankschale 101 zu verändern, um eine Besiedelung der Innenoberfläche 109 durch Mikroorganismen zu verhindern, bzw. stark zu reduzieren.

Insbesondere wird durch die Veränderung der Polarisation der Innenoberfläche 109 eine bipolar polarisierte Innenoberfläche 109 erhalten, um eine Besiedelung der Innenoberfläche 109 durch Mikroorganismen zu verhindern, bzw. stark zu reduzieren.

Insbesondere umfasst die Oberflächen-polarisierende Substanz 107 eine Sterion-Substanz, welche ausgebildet ist, eine Besiedelung der Innenoberfläche 109 durch Mikroorganismen zu verhindern, wobei die Sterion-Substanz insbesondere eine metallorganische Substanz umfasst.

Eine Sterion-Substanz grenzt sich gegenüber herkömmlichen antimikrobiellen Wirkstoffen, wie z.B. Nanometallen, dadurch ab, dass die Sterion-Substanz nicht aus der Flüssigkeitstankschale 101 entweicht, und somit die Wirksamkeit der Sterion-Substanz während der Betriebsdauer des Fahrzeugflüssigkeitstanks 100 nicht oder nur in geringem Maße abnimmt, und ein Anreichern der Sterion-Substanz in der Flüssigkeit 105 verhindert wird. Somit kann durch eine Sterion-Substanz eine hohe antimikrobielle Wirksamkeit der Innenoberfläche 109 der Flüssigkeitstankschale 101 während der Betriebsdauer des Fahrzeugflüssigkeitstanks 100 sichergestellt werden.

Eine Sterion-Substanz kann insbesondere von der Firma SteriOne GmbH & Co. KG, Berlin, Deutschland, bezogen werden.

Damit die Oberflächen-modifizierende Substanz 107 in den Fahrzeugflüssigkeitstank 100 eingebracht werden kann, wird der Kunststoff und die Oberflächen-modifizierende Substanz 107 insbesondere bereits bei der Herstellung des Fahrzeugflüssigkeitstanks 100 miteinander vermischt und anschließend aus der Mischung aus Kunststoff und der Oberflächen-modifizierenden Substanz 107 die Flüssigkeitstankschale 101 geformt, insbesondere im Rahmen eines Spritzgussvorganges geformt, so dass die Flüssigkeitstankschale 101 als ein Spritzgussbauteil ausgebildet ist.

Der Kunststoff der Flüssigkeitstankschale 101 umfasst hierbei insbesondere einen einzigen Kunststoff oder eine Mehrzahl von unterschiedlichen Kunststoffen, wie z.B. Polyolefin und/oder Polyamid, insbesondere Polyethylen, hochdichtes Polyethylen (HDPE) oder Polypropylen. Der Kunststoff der Flüssigkeitstankschale 101 kann insbesondere Ruß umfassen, um wirksame Eigenschaften der Flüssigkeitstankschale 101 sicherzustellen.

Somit können durch das Einbetten der Oberflächen-modifizierenden Substanz 107 in den Kunststoff der Flüssigkeitstankschale 101 Mikroorganismen an der Innenoberfläche 109 der Flüssigkeitstankschale 101 wirksam beeinträchtigt werden, und die Bildung eines Biofilms in dem Fahrzeugflüssigkeitstank 100 kann verhindert werden.

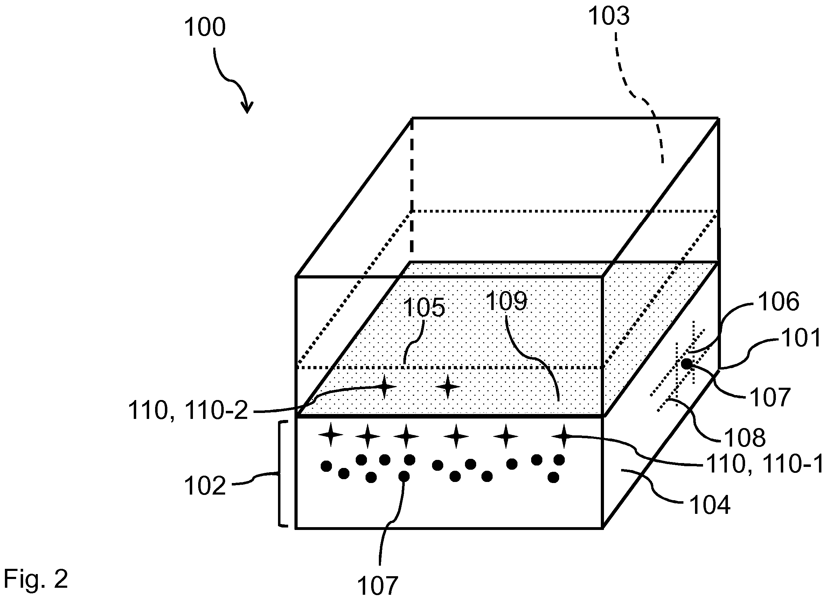

Fig. 2 zeigt eine perspektivische Ansicht eines Fahrzeugflüssigkeitstanks mit einer aus Kunststoff geformten Flüssigkeitstankschale gemäß einer zweiten Ausführungsform.

Wie bereits in der Fig. 1 dargestellt wurde weist auch der Fahrzeugflüssigkeitstank 100 gemäß der in Fig. 2 dargestellten zweiten Ausführungsform eine aus einem Kunststoff geformte Flüssigkeitstankschale 101 auf, welche einen Innenraum 103 des Fahrzeugflüssigkeitstanks 100 zur Aufnahme von Flüssigkeit 105 umschließt, wobei die Flüssigkeitstankschale 101 eine dem Innenraum 103 des Fahrzeugflüssigkeitstanks 100 zugewandte Innenoberfläche 109 aufweist.

Innerhalb des Kunststoffs der Flüssigkeitstankschale 101 ist eine Oberflächen-modifizierende Substanz 107 diffusionsstabil eingebettet, welche ausgebildet ist, eine Oberflächeneigenschaft der Innenoberfläche 109 der Flüssigkeitstankschale 101 zu verändern, um eine Besiedelung der Innenoberfläche 109 durch Mikroorganismen zu verhindern, bzw. signifikant zu reduzieren.

Für Details der Wirkungsweise der Oberflächen-modifizierenden Substanz 107 wird auf die Ausführungen zur Fig. 1 verwiesen.

Zusätzlich zu der Oberflächen-modifizierenden Substanz 107 ist innerhalb des Kunststoffs der Flüssigkeitstankschale 101 ein antimikrobieller Wirkstoff 110, 110-1 eingebettet, wobei der eingebettete antimikrobielle Wirkstoff 110-1 in der Fig. 2 nur schematisch dargestellt ist.

Der Kunststoff der Flüssigkeitstankschale 101 ist durch den antimikrobiellen Wirkstoff 110, 110-1 durchdringbar. Der Kunststoff der Flüssigkeitstankschale 101 ist hierbei ausgebildet, den eingebetteten antimikrobiellen Wirkstoff 110, 110-1 an die Flüssigkeit 105 in dem Innenraum 103 des Fahrzeugflüssigkeitstanks 100 durch Diffusion abzugeben. Ein an die Flüssigkeit 105 abgegebener antimikrobieller Wirkstoff 110, 110-2 ist in der Fig. 2 nur schematisch dargestellt.

Durch das auf Diffusion basierende Abgeben des antimikrobiellen Wirkstoffs 110 an die Flüssigkeit 105 werden nicht nur an der Flüssigkeitstankschale 101 haftende Mikroorganismen beeinträchtigt, sondern es werden auch in der Flüssigkeit 105 bewegliche Mikroorganismen beeinträchtigt, wodurch das Auftreten eines Biofilms in dem Fahrzeugflüssigkeitstank 100 besonders effektiv verhindert werden kann.

Der Kunststoff der Flüssigkeitstankschale 101 weist hierbei insbesondere kleine Poren und/oder molekulare Zwischenräume auf, durch welche der in dem Kunststoff eingebettete antimikrobielle Wirkstoff 110 im Rahmen eines Diffusionsvorgangs dringen kann, so dass der Kunststoff durch den antimikrobiellen Wirkstoff 110 durchdringbar ist.

Der durchdringbare Kunststoff stellt hierbei sicher, dass der eingebettete antimikrobielle Wirkstoff 110 langsam aus dem Kunststoff in die Flüssigkeit 105 des Fahrzeugflüssigkeitstanks 100 diffundiert.

Hierbei ist der Kunststoff 105 insbesondere ausgebildet, den eingebetteten antimikrobiellen Wirkstoff 110 über einen Zeitraum kontinuierlich an die Flüssigkeit 105 des Fahrzeugflüssigkeitstanks 100 abzugeben. Durch die kontinuierliche Abgabe kann sichergestellt werden, dass stets eine geringe Konzentration von für die Mikroorganismen toxischem Wirkstoff 110 in der Flüssigkeit 105 vorhanden ist. Zudem kann durch die kontinuierliche Abgabe des antimikrobiellen Wirkstoffs 110 eine zu schnelle Abgabe des antimikrobiellen Wirkstoffs 110 an die Flüssigkeit 105 verhindert werden, so dass ein zu schneller Verbrauch des antimikrobiellen Wirkstoffs 110 verhindert werden kann.

Insbesondere weist der Kunststoff hierbei ein Wirkstoffdepot auf, in welchem der eingebettete antimikrobielle Wirkstoff 110, 110-1 aufgenommen ist. Das Wirkstoffdepot stellt hierbei insbesondere eine langanhaltende kontinuierliche Abgabe des antimikrobiellen Wirkstoffs 110 an die Flüssigkeit 105 sicher, so dass die Bildung eines Biofilms in dem Fahrzeugflüssigkeitstank 100 für einen langen Zeitraum, insbesondere für den Betriebszeitraum des Fahrzeugflüssigkeitstanks 100, verhindert werden kann.

Damit der antimikrobielle Wirkstoff 110, 110-1 besonders wirksam Mikroorganismen in der Flüssigkeit 105 beeinträchtigen kann, muss der antimikrobielle Wirkstoff 110 bereits in geringen Konzentrationen gegenüber Mikroorganismen eine hohe Wirksamkeit aufweisen.

Derartige hochwirksame antimikrobielle Wirkstoffe 110 können einen Feststoff umfassen, insbesondere einen metallischen Feststoff, oder einen Feststoff, welcher Metallatome, Metallmoleküle und/oder Metallionen enthält. Die antimikrobielle Wirksamkeit beruht hierbei insbesondere auf der hohen Toxizität der Metallatome, Metallmoleküle oder Metallionen für eine Vielzahl von Mikroorganismen.

Der antimikrobielle Wirkstoff 110 kann hierbei einen einzigen antimikrobiellen Wirkstoff 110 oder eine Mehrzahl von antimikrobiellen Wirkstoffen 110 umfassen. Zudem kann der zumindest eine antimikrobielle Wirkstoff 110 zumindest einen Hilfsstoff umfassen, z.B. um Diffusionseigenschaften des antimikrobiellen Wirkstoffs 110 zu unterstützen und/oder um die Wirksamkeit des antimikrobiellen Wirkstoffs 110 zu verbessern. Der Hilfsstoff kann insbesondere ein Vitamin, wie z.B. Ascorbinsäure, ein Antioxidans, wie z.B. ein Carotinoid, einen Puffer, wie z.B. Tris(hydroxymethyl)-aminomethan, oder eine biologisch aktive Substanz, wie z.B. ein Enzym und/oder ein Coenzym, umfassen.

Insbesondere umfasst der antimikrobielle Wirkstoff 110 einen anorganischen Feststoff, wobei ein anorganischer Feststoff im Rahmen der vorliegenden Offenbarung insbesondere ein Feststoff ist, welcher keinen Kohlenstoff aufweist. Insbesondere ist der anorganische Feststoff ausgebildet ist, einer Temperatur von mehr als 200 °C, insbesondere von mehr als 300 °C zu widerstehen. Dadurch kann während der Herstellung des Fahrzeugflüssigkeitstanks 100 sichergestellt werden, dass die Wirksamkeit des antimikrobiellen Wirkstoffs 110 in dem Fahrzeugflüssigkeitstank 100 erhalten bleibt.

Insbesondere kann der antimikrobielle Wirkstoff 110 zumindest eines der folgenden Metalle umfassen, Silber, Zink, Osmium, Gold, Ruthenium und Kupfer, und/oder kann der antimikrobielle Wirkstoff 110 zumindest eine der folgenden Verbindungen umfassen, Silber-Zink-Zeolith, Silber-Phosphat, Kupfer-Verbindung, Zink-Pyrithion, kolloidales Silber, kolloidales Kupfer, kolloidales Zink, Silber-Nanopartikel, Kupfer-Nanopartikel, Zink-Nanopartikel. Hierbei weisen Silber-, Kupfer-, und/oder Zink-Nanopartikel insbesondere einen Durchmesser von weniger als 1 µm auf, insbesondere von weniger als 100 nm, insbesondere von weniger als 50 nm, insbesondere von weniger als 20 nm, insbesondere von weniger als 10 nm, insbesondere von weniger als 1 nm auf.

Insbesondere ist der antimikrobielle Wirkstoff 110 in einem Trägermaterial eingebettet, wobei das Trägermaterial mit dem antimikrobiellen Wirkstoff 110 innerhalb des Kunststoffs eingebettet ist, wobei das Trägermaterial 110 ausgebildet ist, den in dem Trägermaterial eingebetteten antimikrobiellen Wirkstoff 110 an den Kunststoff abzugeben, wobei der Kunststoff ausgebildet ist, den antimikrobiellen Wirkstoff 110 an die Flüssigkeit 105 in dem Innenraum 103 des Fahrzeugflüssigkeitstanks 100 durch Diffusion abzugeben, und wobei das Trägermaterial insbesondere zumindest eines der folgenden Materialen umfasst, Glas, Molekularsiebe, Zeolithe, und/oder Alumosilicate.

Dadurch wird beispielsweise der technische Vorteil erreicht, dass durch das Trägermaterial, in welchem der antimikrobielle Wirkstoff 110 eingebettet ist, eine wirksame kontrollierte Freisetzung des antimikrobiellen Wirkstoffs 110 sichergestellt werden kann. Durch die kontrollierte Freisetzung kann eine wirksame Depotwirkung des Trägermaterials sichergestellt werden, da verhindert wird, dass der antimikrobielle Wirkstoff 110 sofort in großen Mengen freigesetzt wird und somit eine langanhaltende Freisetzung des antimikrobiellen Wirkstoffs 110 sichergestellt wird, wodurch eine wirksame Konzentration des antimikrobiellen Wirkstoffs 110 in der Flüssigkeit 105 während eines längeren Zeitraums sichergestellt wird.

Durch die Kombination des in den Innenraum 103 des Fahrzeugflüssigkeitstanks 100 diffundierenden antimikrobiellen Wirkstoffs 110 und dem in Kunststoff diffusionsstabil eingebetteten Oberflächen-modifizierenden Wirkstoff 110 können Mikroorganismen besonders vorteilhaft an der Innenoberfläche 109 der Flüssigkeitstankschale 101 und innerhalb der Flüssigkeit 105 selbst beeinträchtigt werden, so dass das Bilden eines Mikrofilms verhindert werden kann.

Insbesondere wird der Kunststoff, die Oberflächen-modifizierende Substanz 107 und der antimikrobielle Wirkstoff 110 bereits bei der Herstellung des Fahrzeugflüssigkeitstanks 100 miteinander vermischt und anschließend aus der Mischung die Flüssigkeitstankschale 101 geformt, insbesondere im Rahmen eines Spritzgussvorganges geformt, so dass die Flüssigkeitstankschale 101 als ein Spritzgussbauteil ausgebildet ist.

Der Kunststoff der Flüssigkeitstankschale 101 umfasst hierbei insbesondere einen einzigen Kunststoff oder eine Mehrzahl von unterschiedlichen Kunststoffen, wie z.B. Polyolefin und/oder Polyamid, insbesondere Polyethylen, hochdichtes Polyethylen (HDPE) oder Polypropylen. Der Kunststoff der Flüssigkeitstankschale 101 kann insbesondere Ruß umfassen, um wirksame Eigenschaften der Flüssigkeitstankschale 101 sicherzustellen.

Insbesondere ist die Oberflächen-modifizierende Substanz 107 und der antimikrobielle Wirkstoff 110 in die gesamte aus Kunststoff geformte Flüssigkeitstankschale 101 eingebettet, oder ist die Oberflächen-modifizierende Substanz 107 und der antimikrobielle Wirkstoff 110 in einem Bereich 104 der aus Kunststoff geformten Flüssigkeitstankschale 101 eingebettet, wobei der Bereich 104 insbesondere durch die Innenoberfläche 109 begrenzt ist und sich von der Innenoberfläche 109 aus in die Flüssigkeitstankschale 101 erstreckt. Insbesondere weist der Bereich 104 eine Dicke 102 auf.

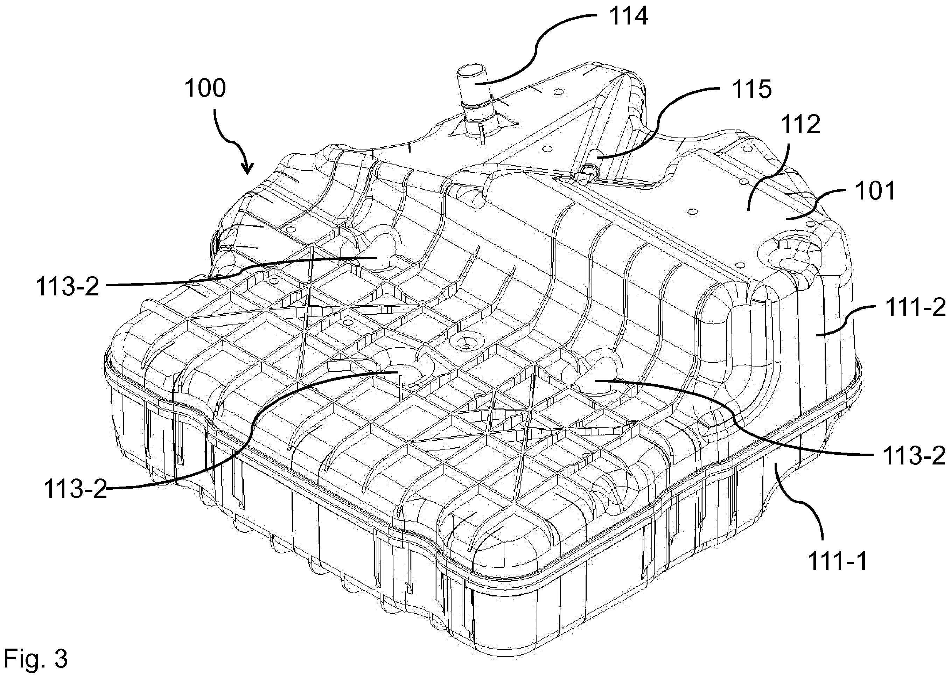

Fig. 3 zeigt eine perspektivische Ansicht eines Fahrzeugflüssigkeitstanks mit einer aus Kunststoff geformten Flüssigkeitstankschale gemäß einer dritten Ausführungsform. Die Flüssigkeitstankschale 101 des Fahrzeugflüssigkeitstanks 100 gemäß der dritten Ausführungsform weist eine in den Kunststoff diffusionsstabil eingebettete Oberflächen-modifizierende Substanz 107 auf, wobei für Details in Bezug auf die Oberflächen-modifizierende Substanz 107 auf die Ausführungen zur ersten Ausführungsform in Bezug auf die Fig. 1 verwiesen wird.

Neben der diffusionsstabil eingebetteten Oberflächen-modifizierenden Substanz 107 kann der Kunststoff der Flüssigkeitstankschale 101 insbesondere zusätzlich einen in Kunststoff eingebettete antimikrobiellen Wirkstoff 110 aufweisen, welcher durch Diffusion an die Flüssigkeit 105 in dem Fahrzeugflüssigkeitstank 100 abgegeben werden kann. Für Details in Bezug auf den antimikrobiellen Wirkstoff 110 wird auf die Ausführungen zur zweiten Ausführungsform in Bezug auf die Fig. 2 verwiesen.

Der in der Fig. 3 dargestellte Fahrzeugflüssigkeitstank 100 gemäß der dritten Ausführungsform ist ebenso wie die erste und zweite Ausführungsform als ein Fahrzeugflüssigkeitstank 100 ausgebildet, welcher insbesondere in einem Wassereinspritzsystem, Motorkühlsystem, oder Abgasreinigungssystem eines Kraftfahrzeugs oder in einem Batterietemperiersystem eines Elektrofahrzeugs angeordnet ist.

Die Flüssigkeitstankschale 101 ist als ein Spritzgussbauteil ausgebildet und weist eine erste, insbesondere untere, Tankhalbschale 111-1 und eine zweite, insbesondere obere, Tankhalbschale 111-2 auf, welche miteinander stoffschlüssig verbunden, insbesondere verschweißt, sind. Die beiden Tankhalbschalen 111-1 und 111-2 begrenzen einen in Fig. 3 nicht einsehbaren Innenraum 103 des Fahrzeugflüssigkeitstanks 100 zur Aufnahme von Flüssigkeit 105.

Um eine stabile Befestigung zwischen den beiden Tankhalbschalen 111-1 und 111-2 sicherzustellen, weist die erste Tankhalbschale 111-1 zumindest ein erstes Befestigungselement 113-1, insbesondere Befestigungsdom, auf, welches sich in den Innenraum 103 des Fahrzeugflüssigkeitstanks 100 erstreckt und weist die zweite Tankhalbschale 111-2 ein zweites Befestigungselement 113-2, insbesondere Befestigungsdom, auf, welches sich in den Innenraum 103 des Fahrzeugflüssigkeitstanks 100 erstreckt, wobei das erste Befestigungselement 113-1 und das zweite Befestigungselement 113-2 miteinander verbunden sind.

In der in Fig. 3 gezeigten Darstellung ist der Innenraum 103 des Fahrzeugflüssigkeitstanks 100 nicht einsehbar und es sind nur Einstülpungen der zweiten Befestigungselemente 113-2 der zweiten Tankhalbschale 111-2 dargestellt.

Die jeweilige Tankhalbschale 111-1, 111-2 weist jeweils einen Schalenboden 112 auf, von dem sich das jeweilige Befestigungselement 113-1, 113-2 in den Innenraum 103 des Fahrzeugflüssigkeitstanks 100 erstreckt. In der in Fig. 3 gezeigten Darstellung ist nur die einem Außenraum des Fahrzeugflüssigkeitstanks 100 zugewandte Oberseite des Schalenbodens 112 der zweiten Tankhalbschale 111-2 gezeigt.

Die Flüssigkeitstankschale 101, insbesondere die zweite Tankhalbschale 111-2 weist eine Zuführöffnung 114 auf, wobei die Zuführöffnung 114 mit einer Zuführleitung zum Zuführen von Flüssigkeit 105 in den Innenraum 103 des Fahrzeugflüssigkeitstanks 100 fluidtechnisch verbindbar ist.

Die Flüssigkeitstankschale 101, insbesondere die zweite Tankhalbschale 111-2, weist ferner eine Entlüftungsöffnung 115 auf, wobei die Entlüftungsöffnung 115 mit einer Entlüftungsleitung zum Entlüften des Innenraums 103 des Fahrzeugflüssigkeitstanks 100 verbindbar ist.

Die Flüssigkeitstankschale 101, insbesondere die erste Tankhalbschale 111-1, weist ferner eine Abführöffnung 117 auf, wobei die Abführöffnung 117 mit einer Abführleitung zum Abführen von Flüssigkeit 105 aus dem Innenraum 103 des Fahrzeugflüssigkeitstanks 100 verbindbar ist. In der in Fig. 3 dargestellten Ansicht ist die an der ersten Tankhalbschale 111-1 angeordnete Abführöffnung 117 nicht gezeigt.

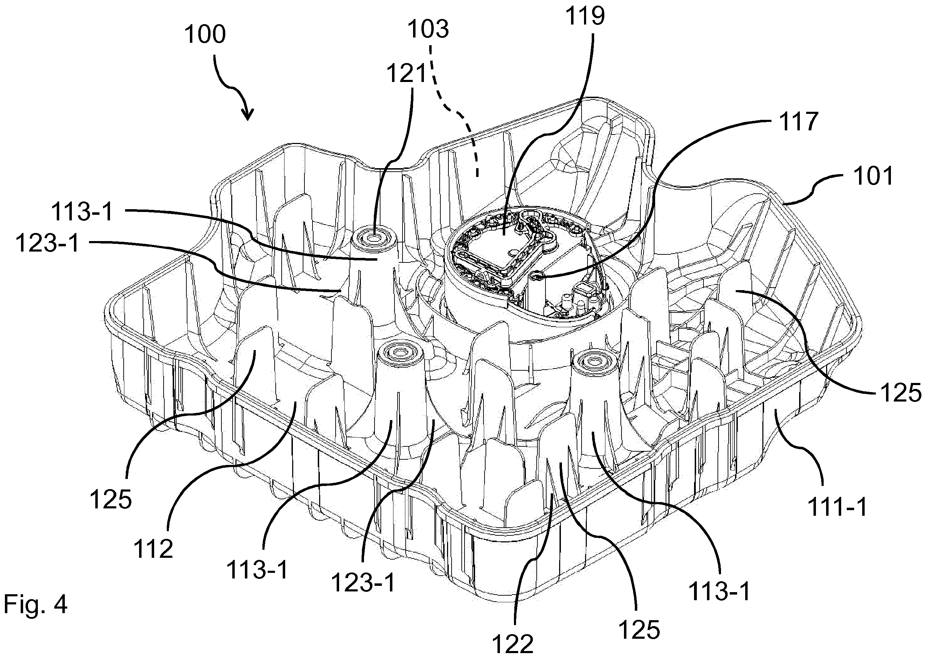

Fig. 4 zeigt eine perspektivische Ansicht einer aus Kunststoff geformten Tankhalbschale eines Fahrzeugflüssigkeitstanks gemäß der dritten Ausführungsform.

In der Fig. 4 ist nur die erste Tankhalbschale 111-1 des in Fig. 3 dargestellten Fahrzeugflüssigkeitstanks 100 gezeigt. In der in Fig. 4 gezeigten Ansicht ist der Innenraum 103 des Fahrzeugflüssigkeitstanks 100 einsehbar.

Die erste Tankhalbschale 111-1 weist einen Schalenboden 112 auf, von dem sich die Befestigungselemente 113-1 in den Innenraum 103 des Fahrzeugflüssigkeitstanks 100 erstrecken.

Insbesondere weist der Fahrzeugflüssigkeitstank 100 zumindest ein Stabilisierungselement 123, 123-1, 123-2 insbesondere Stabilisierungsrippe auf, welche mit dem Schalenboden 112 und dem Befestigungselement 113-1 verbunden ist, und ausgebildet ist, das Befestigungselement 113-1 zu stabilisieren.

Insbesondere weist der Fahrzeugflüssigkeitstank 100 zumindest eine Schwallwand 125 auf, welche mit dem Schalenboden 112 verbunden ist, und ausgebildet ist, eine Flüssigkeitsbewegung von Flüssigkeit 105 in dem Innenraum 103 zu hemmen.

Wie aus der Fig. 4 ersichtlich ist, weist die Schwallwand 125 zumindest ein weiteres Stabilisierungselement 122 auf, welche mit dem Schalenboden 112 und der Schwallwand 125 verbunden ist, und ausgebildet ist, die Schwallwand 125 zu stabilisieren.

In dem Innenraum 103 des Fahrzeugflüssigkeitstanks 100 ist ein Pumpenmodul 119 zum Abpumpen von Flüssigkeit 105 aus dem Fahrzeugflüssigkeitstank 100 angeordnet, wobei an dem Pumpenmodul 119 eine Abführöffnung 117 gezeigt ist, welche mit einer Abführleitung zum Abführen von Flüssigkeit 105 aus dem Innenraum 103 des Fahrzeugflüssigkeitstanks 100 fluidtechnisch verbindbar ist.

Die erste Tankhalbschale 111-1 weist eine Mehrzahl von ersten Befestigungselementen 113-1, insbesondere Befestigungsdome, auf, welches sich in den Innenraum 103 des Fahrzeugflüssigkeitstanks 100 erstrecken. Die ersten Befestigungselemente 113-1 weisen hierbei Kontaktflächen 121 auf, welche mit entsprechenden in Fig. 4 nicht dargestellten Kontaktflächen 121 von zweiten Befestigungselementen 113-2 der zweiten Tankhalbschale 111-2 verbunden werden können, insbesondere verschweißt werden können.

Auch wenn dies in Fig. 4 nicht dargestellt ist, kann in dem Innenraum 103 des Fahrzeugflüssigkeitstanks 100 ein Heizkörper angeordnet sein, welcher ausgebildet ist die Flüssigkeit 105 in dem Fahrzeugflüssigkeitstank 100 zu erwärmen, wobei der Heizkörper insbesondere ein elektrisches Heizelement zum Erwärmen des Heizkörpers aufweist, und wobei das elektrische Heizelement insbesondere ein elektrisches Widerstandsheizelement, einen PTC-Körper oder eine PTC-Folie umfasst.

Auch wenn dies in Fig. 4 nicht dargestellt ist, kann der Fahrzeugflüssigkeitstank 100 eine Trennwand aufweisen, welche mit der Flüssigkeitstankschale 101 verbunden ist, und den Innenraum 103 des Fahrzeugflüssigkeitstanks 100 in einen ersten Innenraumbereich und in einen zweiten Innenraumbereich unterteilt.

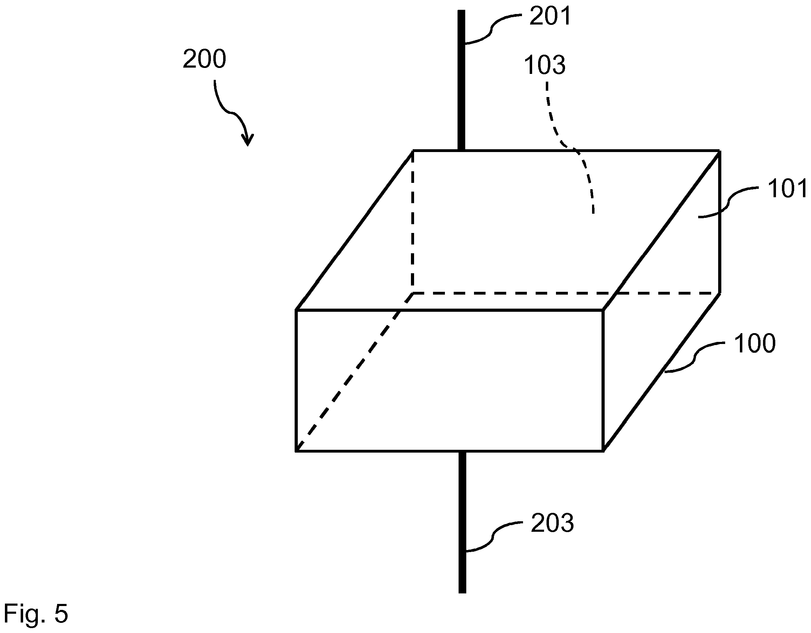

Fig. 5 zeigt eine schematische Darstellung einer Fahrzeugtankanordnung mit einer Zuführleitung und Abführleitung. Die Fahrzeugtankanordnung 200 umfasst einen Fahrzeugflüssigkeitstank 100 gemäß der ersten, zweiten oder dritten Ausführungsform, sowie eine mit dem Fahrzeugflüssigkeitstank 100 fluidtechnisch verbundene Abführleitung 203 zum Abführen von Flüssigkeit 105 aus dem Innenraum 103 des Fahrzeugflüssigkeitstanks 100, sowie eine mit dem Fahrzeugflüssigkeitstank 100 fluidtechnisch verbundene Zuführleitung 201 zum Zuführen von Flüssigkeit 105 in den Innenraum 103 des Fahrzeugflüssigkeitstanks 100.

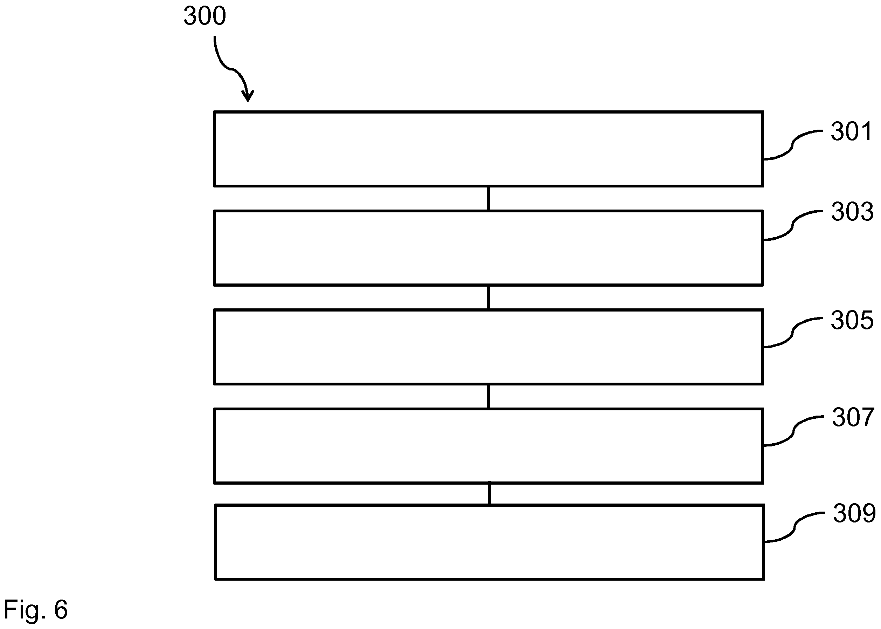

Fig. 6 zeigt eine schematische Darstellung eines Verfahrens zum Herstellen eines Fahrzeugflüssigkeitstanks.

Das Verfahren 300 umfasst als ersten Verfahrensschritt das Bereitstellen 301 von einem Kunststoff. Das Verfahren 300 umfasst als zweiten Verfahrensschritt das Bereitstellen 303 von einer Oberflächen-modifizierenden Substanz 107. Das Verfahren 300 umfasst als dritten Verfahrensschritt das Mischen 305 des Kunststoffs mit der Oberflächen-modifizierenden Substanz 107.

Das Verfahren 300 umfasst als vierten Verfahrensschritt das Schmelzen 307 der Mischung umfassend den Kunststoff und die Oberflächen-modifizierende Substanz 107, um eine Kunststoffschmelze zu erhalten. Das Verfahren 300 umfasst als fünften Verfahrensschritt das Spritzgießen 309 der Kunststoffschmelze, um einen Fahrzeugflüssigkeitstank 100 mit einer Flüssigkeitstankschale 101 aus Kunststoff zu erhalten, wobei innerhalb des Kunststoffs die Oberflächen-modifizierende Substanz 107 diffusionsstabil eingebettet ist.

In einer vorteilhaften Ausführungsform umfasst das Verfahren 300 als ersten Verfahrensschritt das Bereitstellen 301 von einem Kunststoff. Das Verfahren 300 umfasst als zweiten Verfahrensschritt das Bereitstellen 303 von einer Oberflächen-modifizierenden Substanz 107 und einem antimikrobiellen Wirkstoff 110. Das Verfahren 300 umfasst als dritten Verfahrensschritt das Mischen 305 des Kunststoffs mit der Oberflächen-modifizierenden Substanz 107 und mit dem antimikrobiellen Wirkstoff 110.

Das Verfahren 300 umfasst als vierten Verfahrensschritt das Schmelzen 307 der Mischung umfassend den Kunststoff, die Oberflächen-modifizierende Substanz 107 und den antimikrobiellen Wirkstoff 110, um eine Kunststoffschmelze zu erhalten. Das Verfahren 300 umfasst als fünften Verfahrensschritt das Spritzgießen 309 der Kunststoffschmelze, um einen Fahrzeugflüssigkeitstank 100 mit einer Flüssigkeitstankschale 101 aus Kunststoff zu erhalten, wobei innerhalb des Kunststoffs die Oberflächen-modifizierende Substanz 107 diffusionsstabil eingebettet ist und wobei innerhalb des Kunststoffs der antimikrobielle Wirkstoff 110 diffusionsstabil eingebettet ist.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Fahrzeugflüssigkeitstank
- 101: Flüssigkeitstankschale
- 102: Dicke eines Bereichs der Flüssigkeitstankschale
- 103: Innenraum des Fahrzeugflüssigkeitstanks
- 104: Bereich der Flüssigkeitstankschale
- 105: Flüssigkeit
- 106: Matrixaufnahmen
- 107: Oberflächen-modifizierende Substanz
- 108: Kunststoff-Matrix
- 109: Innenoberfläche der Flüssigkeitstankschale
- 110: Antimikrobieller Wirkstoff
- 110-1: Eingebetteter antimikrobieller Wirkstoff
- 110-2: An die Flüssigkeit abgegebener antimikrobieller Wirkstoff
- 111-1: Erste Tankhalbschale
- 111-2: Zweite Tankhalbschale
- 112: Schalenboden
- 113-1: Erstes Befestigungselement
- 113-2: Zweites Befestigungselement
- 114: Zuführöffnung
- 115: Entlüftungsöffnung
- 117: Abführöffnung
- 119: Pumpenmodul
- 121: Kontaktfläche
- 122: Weiteres Stabilisierungselement
- 123-1: Erstes Stabilisierungselement
- 123-2: Zweites Stabilisierungselement
- 125: Schwallwand
- 200: Fahrzeugtankanordnung
- 201: Zuführleitung
- 203: Abführleitung
- 300: Verfahren zum Herstellen eines Fahrzeugflüssigkeitstanks
- 301: Verfahrensschritt: Bereitstellen von einem Kunststoff
- 303: Verfahrensschritt: Bereitstellen von einer Oberflächen-modifizierenden Substanz
- 305: Verfahrensschritt: Mischen des Kunststoffs mit der Oberflächen-modifizierenden Substanz
- 307: Verfahrensschritt: Schmelzen der Mischung
- 309: Verfahrensschritt: Spritzgießen der Kunststoffschmelze

## Patentansprüche

1. Fahrzeugflüssigkeitstank (100) zur Aufnahme von Flüssigkeit (105) in einem Fahrzeug, mit:
einer Flüssigkeitstankschale (101), welche einen Innenraum (103) des Fahrzeugflüssigkeitstanks (100) zur Aufnahme von Flüssigkeit (105) umschließt, wobei die Flüssigkeitstankschale (101) eine dem Innenraum (103) des Fahrzeugflüssigkeitstanks (100) zugewandte Innenoberfläche (109) aufweist,
wobei die Flüssigkeitstankschale (101) aus einem Kunststoff geformt ist, wobei innerhalb des Kunststoffs eine Oberflächen-modifizierende Substanz (107) diffusionsstabil eingebettet ist;
**dadurch gekennzeichnet, dass** die Oberflächen-modifizierende Substanz (107) ausgebildet ist, eine Oberflächeneigenschaft der Innenoberfläche (109) der Flüssigkeitstankschale (101) zu verändern, um eine Besiedelung der Innenoberfläche (109) durch Mikroorganismen zu verhindern,
wobei die Oberflächen-modifizierende Substanz (107) eine Oberflächen-polarisierende Substanz (107) umfasst, welche ausgebildet ist, eine Polarisation der Innenoberfläche (109) der Flüssigkeitstankschale (101) zu verändern, um eine Besiedelung der Innenoberfläche (109) durch Mikroorganismen zu verhindern.

2. Fahrzeugflüssigkeitstank (100) nach Anspruch 1, wobei die Oberflächen-polarisierende Substanz (107) insbesondere eine Sterion-Substanz umfasst.

3. Fahrzeugflüssigkeitstank (100) nach Anspruch 1 oder 2, wobei die Oberflächen-modifizierende Substanz (107) in die gesamte aus Kunststoff geformte Flüssigkeitstankschale (101) eingebettet ist, oder
wobei die Oberflächen- modifizierende Substanz (107) in einem der Innenoberfläche (109) zugewandten Bereich (104) der aus Kunststoff geformten Flüssigkeitstankschale (101) eingebettet ist, wobei insbesondere der Bereich (104) durch die Innenoberfläche (109) begrenzt ist und sich von der Innenoberfläche (109) aus in die Flüssigkeitstankschale (101) erstreckt.

4. Fahrzeugflüssigkeitstank (100) nach einem der vorangehenden Ansprüche, wobei die aus einem Kunststoff geformte Flüssigkeitstankschale (101) eine Kunststoff-Matrix (108) aufweist, in welcher die Oberflächen-modifizierende Substanz (107) diffusionsstabil eingebettet ist, wobei die Kunststoff-Matrix (108) ausgebildet ist, ein Abgeben der Oberflächen-modifizierenden Substanz (107) in die in der Flüssigkeitstankschale (101) aufnehmbaren Flüssigkeit (105) zu reduzieren, insbesondere zu verhindern.

5. Fahrzeugflüssigkeitstank (100) nach einem der vorangehenden Ansprüche, wobei innerhalb des Kunststoffs der Flüssigkeitstankschale (101) ein antimikrobieller Wirkstoff (110) eingebettet ist, wobei der Kunststoff durch den antimikrobiellen Wirkstoff (110) durchdringbar ist, und wobei der Kunststoff ausgebildet ist, den eingebetteten antimikrobiellen Wirkstoff (110) an die Flüssigkeit (105) in dem Innenraum (103) des Fahrzeugflüssigkeitstanks (100) durch Diffusion abzugeben.

6. Fahrzeugflüssigkeitstank (100) nach Anspruch 5, wobei der Kunststoff ausgebildet ist, den eingebetteten antimikrobiellen Wirkstoff (110) über einen Zeitraum kontinuierlich an die Flüssigkeit (105) in dem Innenraum (103) abzugeben, wobei der Kunststoff hierbei insbesondere ein Wirkstoffdepot aufweist, in welchem der eingebettete antimikrobielle Wirkstoff (110) aufgenommen ist.

7. Fahrzeugflüssigkeitstank (100) nach Anspruch 5 oder 6, wobei der antimikrobielle Wirkstoff (110) einen Feststoff, insbesondere einen metallischen Feststoff oder einen Metallatome, Metallmoleküle und/oder Metallionen enthaltenden Feststoff, umfasst.

8. Fahrzeugflüssigkeitstank (100) nach einem der Ansprüche 5 bis 7, wobei der antimikrobielle Wirkstoff (110) zumindest eines der folgenden Metalle umfasst, Silber, Zink, Osmium, Gold, Ruthenium und Kupfer, und/oder der antimikrobielle Wirkstoff (110) zumindest eine der folgenden Verbindungen umfasst, Silber-Zink-Zeolith, Silber-Phosphat, Kupfer-Verbindung, Zink-Pyrithion, kolloidales Silber, kolloidales Kupfer, kolloidales Zink, Silber-Nanopartikel, Kupfer-Nanopartikel, Zink-Nanopartikel, und/oder
wobei der antimikrobielle Wirkstoff (110) in einem Trägermaterial eingebettet ist, wobei das Trägermaterial mit dem antimikrobiellen Wirkstoff (110) innerhalb des Kunststoffs eingebettet ist, wobei das Trägermaterial ausgebildet ist, den in dem Trägermaterial eingebetteten antimikrobiellen Wirkstoff (110) an den Kunststoff abzugeben, wobei der Kunststoff ausgebildet ist, den antimikrobiellen Wirkstoff (110) an die Flüssigkeit (105) in dem Innenraum (103) des Fahrzeugflüssigkeitstanks (100) durch Diffusion abzugeben, wobei das Trägermaterial insbesondere zumindest eines der folgenden Materialen umfasst, Glas, Molekularsiebe, Zeolithe, und/oder Alumosilicate.

9. Fahrzeugflüssigkeitstank (100) nach einem der vorangehenden Ansprüche, wobei die Flüssigkeitstankschale (101) eine erste Tankhalbschale (111-1) und eine zweite Tankhalbschale (111-2) umfasst, welche miteinander stoffschlüssig verbunden, insbesondere verschweißt, sind,
wobei die erste Tankhalbschale (111-1) insbesondere ein erstes Befestigungselement (113-1), insbesondere Befestigungsdom, aufweist, welches sich in den Innenraum (103) des Fahrzeugflüssigkeitstanks (100) erstreckt und
wobei die zweite Tankhalbschale (111-2) insbesondere ein zweites Befestigungselement (113-2), insbesondere Befestigungsdom, aufweist, welches sich in den Innenraum (103) des Fahrzeugflüssigkeitstanks (100) erstreckt, wobei das erste Befestigungselement (113-1) und das zweite Befestigungselement (113-2) miteinander verbunden sind.

10. Fahrzeugflüssigkeitstank (100) nach Anspruch 9, wobei die jeweilige Tankhalbschale (111-1, 111-2) jeweils einen Schalenboden (112) aufweist, von dem sich das jeweilige Befestigungselement (113-1, 113-2) in den Innenraum (103) des Fahrzeugflüssigkeitstanks (100) erstreckt,
wobei der Fahrzeugflüssigkeitstank (100) zumindest ein Stabilisierungselement (123-1, 123-2), insbesondere Stabilisierungsrippe, aufweist, welches mit dem jeweiligen Schalenboden (112) und dem jeweiligen Befestigungselement (113-1, 113-2) verbunden ist, und ausgebildet ist, das Befestigungselement (113-1, 113-2) zu stabilisieren, und/oder
wobei der Fahrzeugflüssigkeitstank (100) zumindest eine Schwallwand (125) aufweist, welche mit dem Schalenboden (112) verbunden ist, und ausgebildet ist, eine Flüssigkeitsbewegung von Flüssigkeit (105) in dem Innenraum (103) zu hemmen.

11. Fahrzeugflüssigkeitstank (100) nach einem der vorangehenden Ansprüche, wobei die Flüssigkeitstankschale (101) eine Zuführöffnung (114) aufweist, wobei die Zuführöffnung (114) mit einer Zuführleitung zum Zuführen von Flüssigkeit (105) in den Innenraum (103) des Fahrzeugflüssigkeitstanks (100) fluidtechnisch verbindbar ist, und/oder wobei die Flüssigkeitstankschale (101) eine Entlüftungsöffnung (115) aufweist, wobei die Entlüftungsöffnung (115) mit einer Entlüftungsleitung zum Entlüften des Innenraums (103) des Fahrzeugflüssigkeitstanks (100) fluidtechnisch verbindbar ist, und/oder wobei die Flüssigkeitstankschale (101) eine Abführöffnung (117) aufweist, wobei die Abführöffnung (117) mit einer Abführleitung zum Abführen von Flüssigkeit (105) aus dem Innenraum (103) des Fahrzeugflüssigkeitstanks (100) fluidtechnisch verbindbar ist.

12. Fahrzeugflüssigkeitstank (100) nach einem der vorangehenden Ansprüche, wobei in dem Innenraum (103) des Fahrzeugflüssigkeitstanks (100) ein Heizkörper angeordnet ist, welcher ausgebildet ist die Flüssigkeit (105) in dem Fahrzeugflüssigkeitstank (100) zu erwärmen, und/oder wobei in dem Innenraum (103) des Fahrzeugflüssigkeitstanks (100) ein Pumpenmodul (119) zum Abpumpen von Flüssigkeit (105) aus dem Fahrzeugflüssigkeitstank (100) angeordnet ist.

13. Fahrzeugtankanordnung (200) mit einem Fahrzeugflüssigkeitstank (100) nach einem der vorangehenden Ansprüche, einer mit dem Fahrzeugflüssigkeitstank (100) fluidtechnisch verbundenen Abführleitung zum Abführen von Flüssigkeit (105) aus dem Innenraum (103) des Fahrzeugflüssigkeitstanks (100), und einer mit dem Fahrzeugflüssigkeitstank (100) fluidtechnisch verbundenen Zuführleitung zum Zuführen von Flüssigkeit (105) in den Innenraum (103) des Fahrzeugflüssigkeitstanks (100).

14. Fahrzeugtankanordnung (200) nach Anspruch 13, wobei die Fahrzeugtankanordnung (200) in einem Wassereinspritzsystem zum Einspritzen von Wasser in einen Verbrennungsmotor eines Kraftfahrzeugs, in einem Motorkühlsystem zum Kühlen eines Verbrennungsmotors eines Kraftfahrzeuges, in einem Abgasreinigungssystem, insbesondere SCR-Abgasreinigungssystem, eines Kraftfahrzeugs, insbesondere Dieselkraftfahrzeugs, oder in einem Batterietemperiersystem eines Elektrofahrzeugs, um eine elektrische Fahrzeugbatterie des Elektrofahrzeugs zu temperieren, angeordnet ist.

15. Verfahren (300) zum Herstellen eines Fahrzeugflüssigkeitstanks (100), wobei das Verfahren (300) die folgenden Verfahrensschritte umfasst:
Bereitstellen (301) von einem Kunststoff;
Bereitstellen (303) von einer Oberflächen-modifizierenden Substanz (107);
Mischen (305) des Kunststoffs mit der Oberflächen-modifizierenden Substanz (107);
Schmelzen (307) der Mischung umfassend den Kunststoff und die Oberflächen-modifizierende Substanz (107), um eine Kunststoffschmelze zu erhalten; und
Spritzgießen (309) der Kunststoffschmelze, um einen Fahrzeugflüssigkeitstank (100) mit einer Flüssigkeitstankschale (101) aus Kunststoff zu erhalten, wobei innerhalb des Kunststoffs die Oberflächen-modifizierende Substanz (107) diffusionsstabil eingebettet ist, wobei die Oberflächen-modifizierende Substanz (107) eine Oberflächen-polarisierende Substanz (107) umfasst, welche ausgebildet ist, eine Polarisation der Innenoberfläche (109) der Flüssigkeitstankschale (101) zu verändern, um eine Besiedelung der Innenoberfläche (109) durch Mikroorganismen zu verhindern.

## Claims

1. Vehicle fluid tank (100) for receiving fluid (105) in a vehicle, the vehicle fluid tank (100) comprising:
a fluid tank shell (101) which encloses an interior space (103) of the vehicle fluid tank (100) for receiving fluid (105), wherein the fluid tank shell (101) comprises an inner surface (109) facing the interior space (103) of the vehicle fluid tank (100),
wherein the fluid tank shell (101) is formed from a plastic, wherein a surface-modifying substance (107) is diffusion-stably embedded within the plastic;
**characterized in that** the surface-modifying substance (107) is configured to change a surface property of the inner surface (109) of the fluid tank shell (101) in order to prevent a colonization of the inner surface (109) by microorganism,
wherein the surface-modifying substance (107) comprises a surface-polarizing substance (107) which is configured to change a polarization of the inner surface (109) of the fluid tank shell (101) in order to prevent a colonization of the inner surface (109) by microorganism.

2. Vehicle fluid tank (100) according to claim 1, wherein the surface-polarizing substance (107) in particular comprises a sterion substance.

3. Vehicle fluid tank (100) according to claim 1 or 2, wherein the surface-modifying substance (107) is embedded in the complete fluid tank shell (101) formed from plastic, or wherein the surface-modifying substance (107) is embedded in an area (104) of the plasticformed fluid tank shell (101) facing the inner surface (109), wherein the area (104) in particular is delimited by the inner surface (109) and extends from the inner surface (109) into the fluid tank shell (101).

4. Vehicle fluid tank (100) according to one of the preceding claims, wherein the fluid tank shell (101) formed from a plastic comprises a plastic matrix (108) in which the surface-modifying substance (107) is diffusion-stably embedded, wherein the plastic matrix (108) is configured to reduce, in particular to prevent, a release of the surface-modifying substance (107) into the fluid (105) which can be received in the fluid tank shell (101).

5. Vehicle fluid tank (100) according to one of the preceding claims, wherein an antimicrobial agent (110) is embedded within the plastic of the fluid tank shell (101), wherein the plastic can be penetrated by the antimicrobial agent (110), and wherein the plastic is configured to deliver the embedded antimicrobial agent (110) to the fluid (105) in the interior space (103) of the vehicle fluid tank (100) by diffusion.

6. Vehicle fluid tank (100) according to claim 5, wherein the plastic is configured to continuously release the embedded antimicrobial agent (110) over a period of time to the fluid (105) in the interior space (103), wherein the plastic in particular comprises an agent depot, in which the embedded antimicrobial agent (110) is received.

7. Vehicle fluid tank (100) according to claim 5 or 6, wherein the antimicrobial agent (110) comprises a solid, in particular a metallic solid or a solid comprising metal atoms, metal molecules and/or metal ions.

8. Vehicle fluid tank (100) according to one of claims 5 to 7, wherein the antimicrobial agent (110) comprises at least one of the following metals, silver, zinc, osmium, gold, ruthenium and copper, and/or wherein the antimicrobial agent (110) comprises at least one of the following compounds, silver-zinc-zeolite, silver-phosphate, copper compound, zincpyrithione, colloidal silver, colloidal copper, colloidal zinc, silver nanoparticles, copper nanoparticles, zinc nanoparticles, and/or
wherein the antimicrobial agent (110) is embedded in a carrier material, wherein the carrier material is embedded within the plastic with the antimicrobial agent (110), wherein the carrier material is configured to release the antimicrobial agent (110) embedded in the carrier material to the plastic, wherein the plastic is configured to deliver the antimicrobial agent (110) to the fluid (105) in the interior space (103) of the vehicle fluid tank (100) by diffusion, wherein the carrier material in particular comprises at least one of the following materials, glass, molecular sieves, zeolites, and/or aluminosilicates.

9. Vehicle fluid tank (100) according to one of the preceding claims, wherein the fluid tank shell (101) comprises a first tank half-shell (111-1) and a second tank half-shell (111-2) which are materially connected to one another, in particular welded to one another,
wherein the first tank half-shell (111-1) in particular comprises a first fastening element (113-1), in particular fastening dome, which extends into the interior space (103) of the vehicle fluid tank (100) and
wherein the second tank half-shell (111-2) in particular comprises a second fastening element (113-2), in particular fastening dome, which extends into the interior space (103) of the vehicle fluid tank (100), wherein the first fastening element (113-1) and the second fastening element (113-2) are connected to one another.

10. Vehicle fluid tank (100) according to claim 9, wherein the respective tank half-shell (111-1, 111-2) each comprises a shell base (112) from which the respective fastening element (113-1, 113-2) extends into the interior space (103) of the vehicle fluid tank (100),
wherein the vehicle fluid tank (100) comprises at least one stabilizing element (123-1, 123-2), in particular stabilizing rib, which is connected to the respective shell base (112) and the respective fastening element (113-1, 113-2), and is configured to stabilize the fastening element (113-1, 113-2), and/or
wherein the vehicle fluid tank (100) comprises at least one surge wall (125) which is connected to the shell bottom (112) and is configured to inhibit a fluid movement of fluid (105) in the interior space (103).

11. Vehicle fluid tank (100) according to one of the preceding claims, wherein the fluid tank shell (101) comprises a supply opening (114), wherein the supply opening (114) can be fluidically connected to a supply line for supplying fluid (105) into the interior space (103) of the vehicle fluid tank (100), and/or wherein the fluid tank shell (101) comprises a vent opening (115), wherein the vent opening (115) can be fluidically connected to a vent line for venting the interior space (103) of the vehicle fluid tank (100), and/or wherein the fluid tank shell (101) comprises a discharge opening (117), wherein the discharge opening (117) can be fluidically connected to a discharge line for discharging fluid (105) from the interior space (103) of the vehicle fluid tank (100).

12. Vehicle fluid tank (100) according to one of the preceding claims, wherein in the interior space (103) of the vehicle fluid tank (100) a heater is arranged which is configured to heat the fluid (105) in the vehicle fluid tank (100), and/or wherein a pump module (119) for pumping fluid (105) out of the vehicle fluid tank (100) is arranged in the interior space (103) of the vehicle fluid tank (100).

13. Vehicle tank arrangement (200) comprising a vehicle fluid tank (100) according to one of the preceding claims, a discharge line fluidly connected to the vehicle fluid tank (100) for discharging fluid (105) from the interior space (103) of the vehicle fluid tank (100), and a supply line fluidly connected with the vehicle fluid tank (100) for supplying fluid (105) into the interior space (103) of the vehicle fluid tank (100).

14. Vehicle tank arrangement (200) according to claim 13, wherein the vehicle tank arrangement (200) is arranged in a water injection system for injecting water into an internal combustion engine of a motor vehicle, in an engine cooling system for cooling an internal combustion engine of a motor vehicle, in an exhaust gas purification system, in particular an SCR exhaust gas purification system, of a motor vehicle, in particular diesel motor vehicle, or in a battery temperature control system of an electric vehicle in order to control the temperature of an electric vehicle battery of the electric vehicle.

15. Method (300) for manufacturing a vehicle fluid tank (100), the method (300) comprising the following method steps:
providing (301) a plastic;
providing (303) a surface-modifying substance (107);
mixing (305) the plastic with the surface-modifying substance (107);
melting (307) the mixture comprising the plastic and the surface-modifying substance (107) to obtain a plastic melt; and
injection molding (309) the plastic melt in order to obtain a vehicle fluid tank (100) comprising a fluid tank shell (101) made of plastic, wherein the surface-modifying substance (107) is embedded diffusion-stably within the plastic, wherein the surface-modifying substance (107) comprises a surface-polarizing substance (107) which is configured to change a polarization of the inner surface (109) of the fluid tank shell (101) in order to prevent a colonization of the inner surface (109) by microorganism.

## Revendications

1. Réservoir de liquide de véhicule (100) destiné à recevoir du liquide (105) dans un véhicule, ledit réservoir comprenant :
une coque de réservoir de liquide (101) qui enferme un espace intérieur (103), destiné à recevoir du liquide (105), du réservoir de liquide de véhicule (100), la coque de réservoir de liquide (101) ayant une surface intérieure (109) dirigée vers l'espace intérieur (103) du réservoir de liquide de véhicule (100),
la coque de réservoir de liquide (101) étant moulée à partir d'une matière synthétique, une substance de modification de surface (107) étant incorporée de manière stable en termes de diffusion à l'intérieur de la matière synthétique ;
**caractérisé en ce que** la substance de modification de surface (107) est conçue pour modifier une propriété de la surface intérieure (109) de la coque de réservoir de liquide (101) afin d'empêcher la colonisation de la surface intérieure (109) par des micro-organismes,
la substance de modification de surface (107) comprenant une substance de polarisation de surface (107) qui est conçue pour modifier une polarisation de la surface intérieure (109) de la coque de réservoir de liquide (101) afin d'empêcher la colonisation de la surface intérieure (109) par des micro-organismes.

2. Réservoir de liquide de véhicule (100) selon la revendication 1, la substance de polarisation de surface (107) comprenant en particulier une substance stérion.

3. Réservoir de liquide de véhicule (100) selon la revendication 1 ou 2, la substance de modification de surface (107) étant incorporée dans la totalité de la coque de réservoir de liquide (101) moulée à partir d'une matière synthétique, ou
la substance de modification de surface (107) étant incorporée dans une zone (104), dirigée vers la surface intérieure (109), de la coque de réservoir de liquide (101) moulée à partir d'une matière synthétique, en particulier la zone (104) étant délimitée par la surface intérieure (109) et s'étendant de la surface intérieure (109) jusque dans la coque de réservoir de liquide (101).

4. Réservoir de liquide de véhicule (100) selon l'une des revendications précédentes, la coque de réservoir de liquide (101) formée à partir d'une matière synthétique comportant une matrice (108) en matière synthétique dans laquelle la substance de modification de surface (107) est incorporée de manière stable en termes de diffusion, la matrice (108) en matière synthétique étant conçue pour réduire, notamment pour empêcher, une libération de la substance de modification de surface (107) dans le liquide (105) pouvant être reçu dans la coque de réservoir de liquide (101) .

5. Réservoir de liquide de véhicule (100) selon l'une des revendications précédentes, un agent antimicrobien (110) étant incorporé dans le matière synthétique de la coque de réservoir de liquide (101), l'agent antimicrobien (110) pouvant pénétrer dans la matière synthétique, et la matière synthétique étant conçue pour libérer l'agent antimicrobien incorporé (110) par diffusion dans le liquide (105) situé dans l'espace intérieur (103) du réservoir de liquide de véhicule (100) .

6. Réservoir de liquide de véhicule (100) selon la revendication 5, la matière synthétique étant conçue pour libérer l'agent antimicrobien incorporé (110) en continu dans le liquide (105) situé dans l'espace intérieur (103) dans un intervalle de temps, la matière synthétique présentant en particulier un dépôt d'agent dans lequel l'agent antimicrobien incorporé (110) est reçu.

7. Réservoir de liquide de véhicule (100) selon la revendication 5 ou 6, l'agent antimicrobien (110) comprenant une matière solide, notamment une matière solide métallique ou une matière solide contenant des atomes métalliques, des molécules métalliques et/ou des ions métalliques.

8. Réservoir de liquide de véhicule (100) selon l'une des revendications 5 à 7, l'agent antimicrobien (110) comprenant l'un au moins des métaux suivants : l'argent, le zinc, l'osmium, l'or, le ruthénium et le cuivre, et/ou l'agent antimicrobien (110) comprenant l'un au moins des composés suivants : une zéolite d'argent et de zinc ; le phosphate d'argent, un composé du cuivre, la pyrithione de zinc, l'argent colloïdal, le cuivre colloïdal, le zinc colloïdal, des nanoparticules d'argent, des nanoparticules de cuivre, des nanoparticules de zinc, et/ou
l'agent antimicrobien (110) étant incorporé dans un matériau de support, le matériau de support pourvu de l'agent antimicrobien (110) étant incorporé dans la matière synthétique, le matériau de support étant conçu pour libérer dans la matière synthétique l'agent antimicrobien (110) incorporé dans le matériau de support, la matière synthétique étant conçue pour délivrer l'agent antimicrobien (110) par diffusion dans le liquide (105) situé dans l'espace intérieur (103) du réservoir de liquide de véhicule (100), le matériau de support comprenant notamment l'un au moins des matériaux suivants : du verre, des tamis moléculaires, des zéolithes et/ou des aluminosilicates.

9. Réservoir de liquide de véhicule (100) selon l'une des revendications précédentes, la coque de réservoir de liquide (101) comprenant une première demi-coque de réservoir (111-1) et une deuxième demi-coque de réservoir (111-2) qui sont reliées l'une à l'autre par une liaison de matière, en particulier soudées,
la première demi-coque de réservoir (111-1) comportant notamment un premier élément de fixation (113-1), notamment un dôme de fixation, qui s'étend jusque dans l'espace intérieur (103) du réservoir de fluide de véhicule (100) et
la deuxième demi-coque de réservoir (111-2) comportant notamment un deuxième élément de fixation (113-2), en particulier un dôme de fixation, qui s'étend jusque dans l'espace intérieur (103) du réservoir de fluide de véhicule (100), le premier élément de fixation (113-1) et le deuxième élément de fixation (113-2) étant reliés l'un à l'autre.

10. Réservoir de liquide de véhicule (100) selon la revendication 9, la demi-coque de réservoir respective (111-1, 111-2) comportant un fond de coque (112) depuis lequel l'élément de fixation respectif (113-1, 113-2) s'étend jusque dans l'espace intérieur (103) du réservoir de liquide du véhicule (100),
le réservoir de fluide de véhicule (100) comportant au moins un élément de stabilisation (123-1, 123-2), en particulier une nervure de stabilisation, qui est relié au fond de coque respectif (112) et à l'élément de fixation respectif (113-1, 113-2) et étant conçu pour stabiliser l'élément de fixation (113-1, 113-2) et/ou
le réservoir de liquide de véhicule (100) comportant au moins une paroi brise-flot (125) qui est reliée au fond de coque (112) et qui est conçue pour empêcher un mouvement de liquide (105) dans l'espace intérieur (103).

11. Réservoir de liquide de véhicule (100) selon l'une des revendications précédentes, la coque de réservoir de liquide (101) comportant une ouverture d'alimentation (114), l'ouverture d'alimentation (114) pouvant être reliée fluidiquement à une conduite d'alimentation destinée à alimenter l'espace intérieur (103) du réservoir de liquide de véhicule (100) en liquide (105), et/ou la coque de réservoir de liquide (101) comportant une ouverture de ventilation (115), l'ouverture de ventilation (115) pouvant être reliée fluidiquement à une conduite de ventilation pour ventiler l'espace intérieur (103) du réservoir de liquide de véhicule (100), et/ou la coque de réservoir de liquide (101) comportant une ouverture d'évacuation (117), l'ouverture d'évacuation (117) pouvant être reliée fluidiquement à une conduite d'évacuation pour évacuer du liquide (105) de l'espace intérieur (103) du réservoir de liquide de véhicule (100).

12. Réservoir de liquide de véhicule (100) selon l'une des revendications précédentes, un élément chauffant étant disposé dans l'espace intérieur (103) du réservoir de liquide de véhicule (100) et étant conçu pour chauffer le liquide (105) dans le réservoir de liquide de véhicule (100), et/ou un module de pompe (119) destiné à pomper du liquide (105) du réservoir de liquide de véhicule (100) étant disposé dans l'espace intérieur (103) du réservoir de liquide de véhicule (100) .

13. Ensemble de réservoir de véhicule (200) comprenant un réservoir de liquide de véhicule (100) selon l'une des revendications précédentes, une conduite d'évacuation reliée fluidiquement au réservoir de liquide de véhicule (100) et destinée à évacuer du liquide (105) de l'espace intérieur (103) du réservoir de liquide de véhicule (100) et une conduite d'alimentation reliée fluidiquement au réservoir de liquide de véhicule (100) et destinée à alimenter l'espace intérieur (103) du réservoir de liquide de véhicule (100) en liquide (105).

14. Ensemble de réservoir de véhicule (200) selon la revendication 13, l'ensemble de réservoir de véhicule (200) étant disposé dans un système d'injection d'eau destiné à injecter de l'eau dans un moteur à combustion interne d'un véhicule automobile, dans un système de refroidissement de moteur destiné à refroidir un moteur à combustion interne d'un véhicule automobile, dans un système d'épuration de gaz d'échappement, en particulier un système d'épuration de gaz d'échappement RCS, d'un véhicule automobile, notamment d'un véhicule automobile diesel, ou dans un système de régulation de température de batterie d'un véhicule électrique afin de réguler la température d'une batterie du véhicule électrique.

15. Procédé (300) de fabrication d'un réservoir de liquide de véhicule (100), le procédé (300) comprenant les étapes suivantes :
fournir (301) une matière synthétique ;
fournir (303) une substance de modification de surface (107) ;
mélanger (305) la matière synthétique à la substance de modification de surface (107) ;
faire fondre (307) le mélange comprenant la matière synthétique et la substance de modification de surface (107) pour obtenir une matière synthétique fondue ; et
mouler par injection (309) la matière synthétique fondue afin d'obtenir un réservoir de liquide de véhicule (100) pourvu d'une coque de réservoir de liquide (101) en matière synthétique, la substance de modification de surface (107) étant incorporée de manière stable en termes de diffusion dans la matière synthétique, la substance de modification de surface (107) comprenant une substance de polarisation de surface (107) qui est conçue pour modifier une polarisation de la surface intérieure (109) de la coque de réservoir de liquide (101) afin d'empêcher la colonisation de la surface intérieure (109) par des micro-organismes.
